# EUROPÄISCHE PATENTANMELDUNG

(11) **EP 4 190 498 A1**
(43) Veröffentlichungstag der Anmeldung: **07.06.2023**
(21) Anmeldenummer: 21211561.2
(22) Anmeldetag: 01.12.2021
(51) Int. Cl.: B25F 1/00, B25F 5/00

(54) **SYSTEME, DIE WERKZEUGMASCHINEN UND EINE ENERGIEVERSORGUNGSVORRICHTUNGEN UMFASSEN, SOWIE ENERGIEVERSORGUNGSVORRICHTUNG**

(71) Anmelder: Hilti Aktiengesellschaft, 9494 Schaan (LI)
(72) Erfinder: Hartmann, Markus, 87665 Mauerstetten (DE); Stanger, Robert, 87600 Kaufbeuren (DE); Meixner, Ralf, 87656 Germaringen (DE); Stempfhuber, Johannes, 86919 Utting am Ammersee (DE); Holubarsch, Markus, 86899 Landsberg am Lech (DE)
(74) Vertreter: Hilti Aktiengesellschaft Corporate Intellectual Property

(57) **Zusammenfassung**

Die vorliegende Erfindung betrifft ein System umfassend eine Werkzeugmaschine und eine erste und eine zweite Energieversorgungsvorrichtung, wobei die Energieversorgungsvorrichtungen über eine Schnittstelle lösbar mit der Werkzeugmaschine verbindbar sind. Die erste Energieversorgungsvorrichtung weist eine Anzahl a von mindestens zwei Kontaktpartnern zur Übertragung von elektrischer Energie an die Werkzeugmaschine auf, während die die zweite Energieversorgungsvorrichtung eine Anzahl b von mindestens zwei Kontaktpartnern zur Übertragung von elektrischer Energie an die Werkzeugmaschine aufweist, wobei die Anzahl a der Kontaktpartner der ersten Energieversorgungsvorrichtung anders ist als die Anzahl b der Kontaktpartner der zweiten Energieversorgungsvorrichtung. In einem zweiten Aspekt betrifft die Erfindung ein System, bei dem die Kontaktpartner der Energieversorgungsvorrichtungen unterschiedliche Beschichtungen aufweisen.

## Beschreibung

Die vorliegende Erfindung betrifft ein System umfassend eine Werkzeugmaschine und eine erste und eine zweite Energieversorgungsvorrichtung, wobei die Energieversorgungsvorrichtungen über eine Schnittstelle lösbar mit der Werkzeugmaschine verbindbar sind. Die erste Energieversorgungsvorrichtung weist eine Anzahl a von mindestens zwei Kontaktpartnern zur Übertragung von elektrischer Energie an die Werkzeugmaschine auf, während die zweite Energieversorgungsvorrichtung eine Anzahl b von mindestens zwei Kontaktpartnern zur Übertragung von elektrischer Energie an die Werkzeugmaschine aufweist, wobei die Anzahl a der Kontaktpartner der ersten Energieversorgungsvorrichtung anders ist als die Anzahl b der Kontaktpartner der zweiten Energieversorgungsvorrichtung. In weiteren Aspekten betrifft die Erfindung ein System, bei dem die Kontaktpartner der Energieversorgungsvorrichtungen und/oder der Werkzeugmaschinen unterschiedliche Beschichtungen aufweisen, sowie eine Energieversorgungsvorrichtung.

### Hintergrund der Erfindung:

Sogenannte kabellose Werkzeugmaschinen, wie beispielsweise Akku-Schrauber, Bohrmaschinen, Sägen, Schleifgeräte, oder dergleichen, können zur Energieversorgung mit einer Energieversorgungsvorrichtung verbunden werden. Die Energieversorgungsvorrichtung kann beispielsweise als Akkumulator ("Akku") ausgebildet sein oder einen solchen umfassen. Akkumulatoren weisen üblicherweise eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung, wie einem Ladegerät, verbunden, sodass elektrische Energie zu den Energiespeicherzellen gelangen kann.

Bei der Übertragung von elektrischer Energie können hohe elektrische Belastungen auftreten. Allerdings haben nicht alle Werkzeugmaschinen eine gleichen oder ähnlichen Leistungsbedarf, d.h. die elektrischen Belastungen können je nach Energie- und/oder Leistungsbedarf der Werkzeugmaschine variieren. Um diesen hohen, ggf. je nach Leistungsbedarf der Werkzeugmaschine abweichenden elektrischen Belastungen gerecht zu werden, soll ein System zur Versorgung von Werkzeugmaschinen mit elektrischer Energie bereitgestellt werden, mit dem flexibel auf die unterschiedlichen Leistungsanforderungen der Werkzeugmaschinen reagiert wird und bei dem gleichzeitig eine robuste, langlebige und leistungsstarke Schnittstelle zur Übertragung von elektrischer Energie für solche Werkzeugmaschinen bereitgestellt wird, die einen hohen Energie- und/oder Leistungsbedarf aufweisen, wobei ein hoher Energie- und/oder Leistungsbedarf üblicherweise mit erhöhten elektrischen Belastungen einhergeht.

Die Aufgabe, die der vorliegenden Erfindung zugrunde liegt, besteht darin, die Mängel und Nachteile des Standes der Technik zu überwinden und Systeme zur Versorgung von Werkzeugmaschinen mit elektrischer Energie bereitzustellen, mit denen einerseits flexibel auf die unterschiedlichen Leistungsanforderungen der Werkzeugmaschinen reagiert werden kann und mit den andererseits eine robuste, langlebige und leistungsstarke Schnittstelle zur Übertragung von großen Strömen an leistungsstarke Werkzeugmaschinen mit einem hohen Energie- und/oder Leistungsbedarf ermöglicht wird.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System umfassend eine Werkzeugmaschine und mindestens eine erste und eine zweite Energieversorgungsvorrichtung vorgesehen, wobei die Energieversorgungsvorrichtungen über eine Schnittstelle lösbar mit der Werkzeugmaschine verbindbar sind. Die erste Energieversorgungsvorrichtung weist eine Anzahl a von mindestens zwei Kontaktpartnern (a1, a2, ...) zur Übertragung von elektrischer Energie an die Werkzeugmaschine auf, während die zweite Energieversorgungsvorrichtung eine Anzahl b von mindestens zwei Kontaktpartnern (b1, b2, ...) zur Übertragung von elektrischer Energie an die Werkzeugmaschine aufweist, wobei die Anzahl a der Kontaktpartner der ersten Energieversorgungsvorrichtung anders ist als die Anzahl b der Kontaktpartner der zweiten Energieversorgungsvorrichtung. Das bedeutet im Sinne der Erfindung bevorzugt, dass die Energieversorgungsvorrichtungen eine unterschiedliche Anzahl von Kontaktpartnern aufweisen: a # b. Die Formulierung, dass die Energieversorgungsvorrichtungen jeweils mindestens zwei Kontaktpartner aufweisen, bedeutet im Sinne der Erfindung bevorzugt, dass die Energieversorgungsvorrichtungen pro Pol jeweils mindestens einen Kontaktpartner aufweisen. Die Energieversorgungsvorrichtungen weisen jeweils einen Pluspol und einen Minuspol auf, wobei jedem Pol mindestens ein Kontaktpartner zugeordnet werden kann. Dadurch ergibt sich vorzugsweise eine gerade Anzahl von Kontaktpartnern an den Energieversorgungsvorrichtungen.

Vorzugsweise unterscheidet sich die Anzahl der Kontaktpartner der ersten Energieversorgungsvorrichtung von der Anzahl der Kontaktpartner der zweiten Energieversorgungsvorrichtung. Es kann beispielsweise im Sinne der Erfindung bevorzugt sein, dass die Werkzeugmaschine vier Kontaktpartner aufweist, die erste Energieversorgungsvorrichtung ebenfalls vier Kontaktpartner und die zweite Energieversorgungsvorrichtung zwei Kontaktpartner. Es ist auf diese Weise die Bedingung erfüllt, dass die Anzahl der Kontaktpartner der ersten und der zweiten Energieversorgungsvorrichtung unterschiedlich sind, nämlich vier auf der einen und zwei auf der anderen Seite. Es kann im Sinne der Erfindung bevorzugt sein, dass eine der Energieversorgungsvorrichtungen dieselbe Anzahl von Kontaktpartnern wie die Werkzeugmaschine aufweist: n = a. Vorzugsweise weist dann die andere Energieversorgungsvorrichtung eine Anzahl b von Kontaktpartnern auf, wobei b < a. Mit anderen Worten kann die andere Energieversorgungsvorrichtung dann eine geringere Anzahl von Kontaktpartnern aufweisen als die Energieversorgungsvorrichtung, deren Anzahl a der Kontaktpartner der Anzahl n der Kontaktpartner der Werkzeugmaschine entspricht. Selbstverständlich kann auch die zweite Energieversorgungsvorrichtung dieselbe Anzahl b von Kontaktpartnern wie die Werkzeugmaschine aufweisen: b = n, während die erste Energieversorgungsvorrichtung eine geringere Anzahl a von Kontaktpartnern als die zweite Energieversorgungsvorrichtung oder die Werkzeugmaschine aufweist: a < b und a < n.

Vorteilhafterweise kann mit der Erfindung ein System zur Versorgung von Werkzeugmaschinen mit elektrischer Energie bereitgestellt werden, mit dem besonders flexibel auf die unterschiedlichen Leistungsanforderungen von Werkzeugmaschinen reagiert wird und bei dem gleichzeitig eine robuste, langlebige und leistungsstarke Schnittstelle zur Übertragung von elektrischer Energie für solche Werkzeugmaschinen bereitgestellt wird, die einen hohen Energie- und/oder Leistungsbedarf aufweisen. Darüber hinaus kann eine wirtschaftliche Kontaktsystemvariante für solche Werkzeugmaschinen, die einen geringen Energie- und Leistungsbedarf haben, bereitgestellt werden.

Mit der Erfindung kann eine Energieversorgungsplattform für Werkzeugmaschinen bereitgestellt werden, die mit unterschiedlichen Energieversorgungsvorrichtungen verbunden werden können, um von ihnen elektrische Energie zu beziehen. Dabei kann die Energieversorgungsvorrichtung nach den Bedürfnissen an elektrischer Energie, Stromwerte und/oder Spannungen ausgewählt werden, wobei eine große Anzahl von Kontaktpartnern an einer Energieversorgungsvorrichtung vorzugsweise mehr Energie oder größere Ströme bereitstellen kann als eine Energieversorgungsvorrichtung mit einer geringeren Anzahl von Kontaktpartnern. Der Nutzer kann somit die Energieversorgungsvorrichtung entsprechend den Anforderungen der durchzuführenden Arbeiten auswählen. Wenn die erste Energieversorgungsvorrichtung mehr Kontaktpartner als die zweite Energieversorgungsvorrichtung aufweist, ist es im Sinne der Erfindung bevorzugt, dass die erste Energieversorgungsvorrichtung Werkzeugmaschinen mit einem hohem Leistungsbedarf versorgen kann, währen die zweite Energieversorgungsvorrichtung mit der geringeren Anzahl von Kontaktpartner vorzugsweise dazu eingerichtet ist, Werkzeugmaschinen mit einem geringeren Leistungsbedarf zu bedienen bzw. mit elektrischer Energie zu versorgen. Es kann selbstverständlich auch bevorzugt sein, weniger leistungsstarke Energieversorgungsvorrichtungen mit leistungsstarken Werkzeugmaschinen zu kombinieren und umgekehrt. Vorteilhafterweise kann mit der Erfindung eine sehr flexible und leicht individuell anpassbare Energieversorgungsplattform bereitgestellt werden, die eine optimale Versorgung mit elektrischer Energie von Werkzeugmaschinen mit unterschiedlichen Leistungsanforderungen ermöglicht.

Es ist im Sinne der Erfindung bevorzugt, dass die Energieversorgungsvorrichtungen des Systems eine im Wesentlichen gleiche Nennspannung aufweisen. Die Energieversorgungsvorrichtungen können beispielsweise eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die Energieversorgungsvorrichtungen weisen jeweils mindestens eine Energiespeicherzelle auf, wobei die mindestens eine Energiespeicherzelle der Energieversorgungsvorrichtungen beispielsweise eine Spannung von 3,6 V aufweisen, ohne darauf beschränkt zu sein. Die Formulierung, dass die Energieversorgungsvorrichtungen des Systems im Wesentlichen gleiche Nennspannungen aufweisen, bedeutet im Sinne der Erfindung bevorzugt, dass die Energieversorgungsvorrichtungen hinsichtlich der bereitzustellenden Nennspannungen im Wesentlichen gleich ausgebildet sind. Dabei sollen aber kleineren Abweichungen beispielsweise im Bereich von +/- 3 Volt vorzugsweise auch als «im Wesentlichen gleiche Nennspannung» betrachtet werden, da beispielsweise Alterungseffekte oder unterschiedliche Ladungszustände der Energieversorgungsvorrichtungen dazu führen können, dass die Nennspannungen in einem geringen Maße voneinander abweichen, obwohl die Energieversorgungsvorrichtungen an sich, beispielsweise herstellungsbedingt, gleiche Nennspannungen aufweisen.

Bei den Kontaktpartner kann es sich beispielsweise um die Bestandteile von Steckverbindungen zur Übertragung von elektrischer Energie handeln. Dabei bilden vorzugsweise zueinander korrespondierende Kontaktpartner eine Verbindung, beispielsweise eine Steckverbindung. Zueinander korrespondierende Kontaktpartner können beispielsweise weibliche und männliche Kontaktpartner sein, wie später beschrieben wirdn. Die Kontaktpartner können eine unterschiedliche Anzahl von Einzelkontakten, Kontaktpunkten oder Kontaktbereichen aufweisen, wobei in diesen Einzelkontakten, Kontaktpunkten oder Kontaktbereichen elektrische Energie von dem einem zu dem anderen Kontaktpartner übertragen wird. Wenn beispielsweise die weiblichen Kontaktpartner an einer der Energieversorgungsvorrichtungen angeordnet vorliegen und die männlichen Kontaktpartner an der Werkzeugmaschine, kann Strom von den weiblichen Kontaktpartnern der Energieversorgungsvorrichtung an die männlichen Kontaktpartner der Werkzeugmaschine übertragen werden bzw. elektrischer Strom fließen. Es ist im Sinne der Erfindung bevorzugt, dass eine Kombination von Kontaktpartnern, also ein Paar aus zwei korrespondieren Kontaktpartnern, durch eine festgelegte Stromtragfähigkeit gekennzeichnet ist.

Mit der Erfindung kann vorzugsweise die Anzahl der entstehenden Kontaktpartner variiert bzw. an unterschiedliche Leistungsanforderungen angepasst werden. Insbesondere kann die Anzahl derjenigen Paare von Kontaktpartnern, durch die ein Strom fließt bzw. mit denen elektrische Energie übertragen wird, bedarfsgerecht angepasst, d.h. beispielsweise erhöht, werden. Dadurch kann vorteilhafterweise die elektrische Belastung auf mehrere Kontaktpunkte besser verteilt werden.

Es ist im Sinne der Erfindung bevorzugt, dass entweder alle n Kontaktpartner der Werkzeugmaschine mit Kontaktpartnern der verbundenen Energieversorgungsvorrichtung verbunden vorliegen oder weniger als n Kontaktpartner der Werkzeugmaschine mit Kontaktpartnern der verbundenen Energieversorgungsvorrichtung verbunden vorliegen, wenn die erste oder die zweite Energieversorgungsvorrichtung mit der Werkzeugmaschine verbunden vorliegt. Alternativ kann es im Sinne der Erfindung auch bevorzugt sein, dass die Werkzeugmaschine weniger Kontaktpartner aufweist, wobei dann vorzugsweise alle n Kontaktpartner der Werkzeugmaschine mit Kontaktpartnern der verbundenen Energieversorgungsvorrichtung verbunden vorliegen, während «überschüssige» oder «überzählige» Kontaktpartner der Energieversorgungsvorrichtung ungenutzt bleiben.

Es kann im Sinne der Erfindung auch bevorzugt sein, dass die Werkzeugmaschine weniger Kontakte als eine oder beide der Energieversorgungsvorrichtungen aufweist. Beispielsweise kann die Werkzeugmaschine zwei Kontaktpartner aufweisen und eine der Energieversorgungsvorrichtungen vier Kontaktpartner. Bei Verbindung dieser Werkzeugmaschine mit zwei Kontaktpartnern und der Energieversorgungsvorrichtung mit vier Kontaktpartnern bleiben dann zwei Kontaktpartner der Energieversorgungsvorrichtung im Verbindungsfall ungenutzt. Insgesamt können in diesem Ausführungsbeispiel der Erfindung zwei Stromübetragungs-Paare gebildet werden. Wenn die eine Energieversorgungsvorrichtung vier Kontaktpartner aufweist, kann es im Sinne der Erfindung bevorzugt sein, dass die andere Energieversorgungsvorrichtung zwei oder sechs Kontaktpartner aufweist.

Wenn zum Beispiel die Werkzeugmaschine vier Kontaktpartner aufweist und mit der ersten Energieversorgungsvorrichtung verbunden vorliegt, wobei die erste Energieversorgungsvorrichtung auch vier Kontaktpartner aufweist, dann sind vorzugsweise alle vier Kontaktpartner der Werkzeugmaschine mit den vier Kontaktpartnern der ersten, d.h. der verbundenen Energieversorgungsvorrichtung verbunden und somit «besetzt». Mit anderen Worten ist für jeden Kontaktpartner der Werkzeugmaschine auf Seiten Energieversorgungsvorrichtung ein Kontaktpartner vorhanden, so dass alle Kontaktpartner der Werkzeugmaschine mit einem Kontaktpartner der ersten Energieversorgungsvorrichtung verbunden sind. Dabei können sowohl die Kontaktpartner der ersten Energieversorgungsvorrichtung und der Werkzeugmaschine sowohl weibliche oder männliche Kontaktpartner sein. In einem besonders bevorzugten Ausführungsbeispiel der Erfindung können die Kontaktpartner der Werkzeugmaschine männliche Kontaktpartner sein, während die Kontaktpartner der Energieversorgungsvorrichtungen weibliche Kontaktpartner sind. Mit anderen Worten kann die Werkzeugmaschine Schwerter umfassende Kontaktpartner umfassen, wobei die Schwerter der Werkzeugmaschine von Aufnahmeklemmen an der Energieversorgungsvorrichtung aufgenommen werden können, wobei die Aufnahmeklemmen Bestandteil der weiblichen Kontaktpartner sind. Selbstverständlich können auch weibliche Kontaktpartner an der Werkzeugmaschine und männliche Kontaktpartner an den Energieversorgungsvorrichtungen vorgesehen sein. Darüber hinaus können gemischte Gruppen von männlichen und weiblichen Kontaktpartnern an den beteiligten System-Geräten vorgesehen sein. In dem vorliegenden Ausführungsbeispiel der Erfindung, bei dem die Werkzeugmaschine vier Kontaktpartner und die erste Energieversorgungsvorrichtung ebenfalls vier Kontaktpartner aufweist, handelt es sich bei der ersten Energieversorgungsvorrichtung vorzugsweise um eine leistungsstärkere oder leistungsfähigere Energieversorgungsvorrichtung als die zweite Energieversorgungsvorrichtung. Durch die größere Anzahl der Kontaktpartner, die die erste Energieversorgungsvorrichtung aufweist, kann auch eine größere Menge elektrischer Energie pro Zeiteinheit übertragen werden oder es können höhere Ströme fließen im Vergleich zur zweiten Energieversorgungsvorrichtung. Damit ist die erste Energieversorgungsvorrichtung insbesondere zur Versorgung von solchen Werkzeugmaschinen geeignet, die einen hohen Leistungsbedarf haben und ggf. auch auf hohe Entladeströme der Energieversorgungsvorrichtung angewiesen sind.

In dem Ausführungsbeispiel der Erfindung, bei dem die Werkzeugmaschine vier Kontaktpartner und die erste Energieversorgungsvorrichtung ebenfalls vier Kontaktpartner aufweist, kann beispielsweise die zweite Energieversorgungsvorrichtung zwei Kontaktpartner aufweisen. In diesem Fall bleiben zwei Kontaktpartner der Werkzeugmaschine unbenutzt, wenn die Werkzeugmaschine mit der zweiten Energieversorgungsvorrichtung verbunden wird, um elektrische Energie von der zweiten Energieversorgungsvorrichtung zu beziehen. Diese Situation ist mit der Formulierung, dass «weniger als n Kontaktpartner der Werkzeugmaschine mit Kontaktpartnern der verbundenen Energieversorgungsvorrichtung verbunden vorliegen». Der Buchstabe «n» bezeichnet hier die Anzahl der Kontaktpartner der Werkzeugmaschine, die im vorliegenden Beispiel vier beträgt. Indem die zweite Energieversorgungsvorrichtung nur zwei Kontaktpartner aufweist, bleiben zwei Kontaktpartner der Werkzeugmaschine unbenutzt, so dass sie keinen Beitrag zur Übertragung der elektrischen Energie von der Energieversorgungsvorrichtung zur Werkzeugmaschine leisten. In dem vorliegenden Ausführungsbeispiel der Erfindung, bei dem die Werkzeugmaschine vier Kontaktpartner und die zweite Energieversorgungsvorrichtung beispielsweise nur zwei Kontaktpartner aufweist, handelt es sich bei der zweiten Energieversorgungsvorrichtung vorzugsweise um eine weniger leistungsstarke oder leistungsfähige Energieversorgungsvorrichtung als die erste Energieversorgungsvorrichtung. Durch die geringere Anzahl der Kontaktpartner, die die zweite Energieversorgungsvorrichtung aufweist, kann auch eine geringere Menge elektrischer Energie pro Zeiteinheit übertragen werden oder es können niedrigere Ströme fließen im Vergleich zur ersten Energieversorgungsvorrichtung. Damit ist die zweite Energieversorgungsvorrichtung insbesondere zur Versorgung von solchen Werkzeugmaschinen geeignet, die einen geringen Leistungsbedarf haben und keiner hohen Entladeströme der Energieversorgungsvorrichtung bedürfen.

Das vorgeschlagene System weist zwei Energieversorgungsvorrichtungen auf. Es kann im Sinne der Erfindung auch bevorzugt sein, dass das System mehr als zwei Energieversorgungsvorrichtungen aufweist, beispielsweise drei, vier, fünf, sechs, ..., zehn, ... zwanzig oder mehr Energieversorgungsvorrichtungen, ohne darauf beschränkt zu sein. Mindestens zwei der beteiligten Energieversorgungsvorrichtungen weisen dabei unterschiedliche Anzahlen von Kontaktpartnern auf, beispielsweise zwei und vier Kontaktpartner. Die Energieversorgungsvorrichtungen können aber auch sechs, acht oder zehn Kontaktpartner aufweisen, ohne darauf beschränkt zu sein.

Es kann im Sinne der Erfindung bevorzugt sein, dass das System mehr als eine Werkzeugmaschine aufweist. In dieser bevorzugten Ausführungsform der Erfindung weist das System eine zweite Werkzeugmaschine auf, wobei die erste Werkzeugmaschine mindestens einen ersten Kontaktpartner n1 zum Empfang von elektrischer Energie von der einer der Energieversorgungsvorrichtungen aufweist und wobei die zweite Werkzeugmaschine mindestens einen zweiten Kontaktpartner m1 zum Empfang von elektrischer Energie von der einer der Energieversorgungsvorrichtungen aufweist, wobei die Anzahl n der Kontaktpartner der ersten Werkzeugmaschine anders ist als die Anzahl m der Kontaktpartner der zweiten Werkzeugmaschine. Es ist im Sinne der Erfindung bevorzugt, dass sich auch die Anzahlen n und m der Kontaktpartner der ersten und der zweiten Werkzeugmaschine voneinander unterscheiden. Die für die mindestens zwei Energieversorgungsvorrichtungen aufgezeigten Kombinationen von Kontaktpartnern und Verbindungsmöglichketen gelten für die Werkzeugmaschine analog.

Vorzugsweise unterscheidet sich die Anzahl der Kontaktpartner der ersten Werkzeugmaschine von der Anzahl der Kontaktpartner der zweiten Werkzeugmaschine. Im folgenden Beispiel wird vorzugsweise von einer Energieversorgungsvorrichtung ausgegangen, mit der die beiden Werkzeugmaschinen verbunden werden kann. Diese eine Energieversorgungsvorrichtung weist vorzugsweise eine Anzahl von a Kontaktpartnern auf. Es kann beispielsweise im Sinne der Erfindung bevorzugt sein, dass die Energieversorgungsvorrichtung vier Kontaktpartner aufweist, die erste Werkzeugmaschine ebenfalls vier Kontaktpartner und die zweite Werkzeugmaschine zwei Kontaktpartner. Es ist auf diese Weise die Bedingung erfüllt, dass die Anzahl der Kontaktpartner der ersten und der zweiten Werkzeugmaschine unterschiedlich sind, nämlich vier auf der einen und zwei auf der anderen Seite. Es kann im Sinne der Erfindung bevorzugt sein, dass eine der Werkzeugmaschinen dieselbe Anzahl von Kontaktpartnern wie die Energieversorgungsvorrichtung aufweist: n = a. Vorzugsweise weist dann die andere Werkzeugmaschine eine Anzahl m von Kontaktpartnern auf, wobei m > a oder m < a. Mit anderen Worten kann die andere Werkzeugmaschine eine geringere oder eine größere Anzahl m von Kontaktpartnern aufweisen als die Werkzeugmaschine, deren Anzahl n der Kontaktpartner der Anzahl a der Kontaktpartner der Energieversorgungsvorrichtung entspricht. Selbstverständlich kann auch die zweite Werkzeugmaschine dieselbe Anzahl von Kontaktpartnern wie die Energieversorgungsvorrichtung aufweisen: m = a, während die erste Werkzeugmaschine eine geringere oder größere Anzahl n von Kontaktpartnern als die zweite Werkzeugmaschine oder die Energieversorgungsvorrichtung aufweist: n > m und n > a oder n < m und n < a.

Es ist im Sinne der Erfindung bevorzugt, dass die Energieversorgungsvorrichtungen eine gerade Anzahl von Kontaktpartnern aufweisen. Es ist im Sinne der Erfindung bevorzugt, dass die Energieversorgungsvorrichtungen je einen Pluspol und einen Minuspol aufweisen, wobei jeder Pol mit mindestens einem Kontaktpartner in Verbindung steht. Vorzugsweise weist die erste Energieversorgungsvorrichtung einen ersten Pluspol und einen ersten Minuspol auf und die zweite Energieversorgungsvorrichtung einen zweiten Pluspol und einen zweiten Minuspol auf, wobei jeder Pol mit mindestens einem Kontaktpartner verbunden vorliegt.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die erste Energieversorgungsvorrichtung und die zweite Energieversorgungsvorrichtung dazu eingerichtet sind, die Werkzeugmaschine mit elektrischer Energie zu versorgen. Jeweils eine der beiden Energieversorgungsvorrichtungen kann dazu lösbar mit der Werkzeugmaschine verbunden sein, während die andere Energieversorgungsvorrichtung beispielsweise in einem Ladegerät angeordnet ist und aufgeladen wird. Die Verbindung erfolgt vorzugsweise über eine Schnittstelle. Vorzugsweise umfasst die Schnittstelle mindestens einen weiblichen Kontaktpartner und einen männlichen Kontaktpartner, die an der Werkzeugmaschine oder an den Energieversorgungsvorrichtung angeordnet vorliegen können. Es ist im Sinne der Erfindung bevorzugt, dass die Werkzeugmaschine mindestens zwei Kontaktpartner n zur Übertragung von elektrischer Energie von den Energieversorgungsvorrichtungen an die Werkzeugmaschine aufweist. Vorzugsweise korrespondieren die Kontaktpartner a und b der ersten und der zweiten Energieversorgungsvorrichtung mit den Kontaktpartnern n der Werkzeugmaschine. Der Begriff «korresponieren» bedeutet im Sinne der Erfindung bevorzugt, dass die Kontaktpartner so zueinander passen, dass sie miteinander verbunden werden können. Die Kontaktpartner können jeweils weiblich oder männlich ausgebildet sind, wobei die weiblichen Kontaktpartner vorzugsweise von einer Aufnahmeklemme gebildet werden können und die männlichen Kontaktpartner ein Schwert zum Einführen in die Aufnahmeklemme umfassen können. Die Kontaktpartner werden im Sinne der Erfindung bevorzugt auch als Leistungskontakte der Schnittstelle bezeichnet. Es ist im Sinne der Erfindung bevorzugt, dass je ein weiblicher mit einem männlichen Kontaktpartner verbunden werden kann, um eine Stromübertragungsverbindung zwischen der Werkzeugmaschine und einer der Energieversorgungsvorrichtungen herzustellen. Ein Paar von korrespondierenden Kontaktpartnern umfasst vorzugsweise einen männlichen und einen weiblichen Kontaktpartner.

Es ist im Sinne der Erfindung bevorzugt, dass die Energieversorgungsvorrichtungen weibliche Kontaktpartner und/oder männliche Kontaktpartner aufweisen können. Darüber hinaus kann auch die Werkzeugmaschine weibliche Kontaktpartner und/oder männliche Kontaktpartner aufweisen. Es kann im Sinne der Erfindung aber auch bevorzugt sein, dass die Energieversorgungsvorrichtungen und/oder die Werkzeugmaschine «gemischte Kontaktpartner» aufweisen, also mindestens einen männlichen und mindestens einen weiblichen Kontaktpartner. Es ist im Sinne der Erfindung bevorzugt, dass die Systempartner zueinander korrespondiere Kontaktpartner aufweisen, so dass jeweils ein männlicher Kontaktpartner auf einen weiblichen Kontaktpartner trifft, um ein Stromübertragungs-Paar zu bilden.

In einem zweiten Aspekt betrifft die Erfindung ein System, das eine Werkzeugmaschine und eine erste Energieversorgungsvorrichtung, sowie eine zweite Energieversorgungsvorrichtung umfasst. Die Energieversorgungsvorrichtungen können über eine Schnittstelle lösbar mit der Werkzeugmaschine verbunden werden. Die erste Energieversorgungsvorrichtung weist mindestens zwei erste Kontaktpartner zur Übertragung von elektrischer Energie an die Werkzeugmaschine auf, während die zweite Energieversorgungsvorrichtung mindestens zwei zweite Kontaktpartner zur Übertragung von elektrischer Energie an die Werkzeugmaschine aufweist, wobei die ersten Kontaktpartner eine erste Beschichtung aufweisen und die zweiten Kontaktpartner eine zweite Beschichtung aufweisen. Es ist im Sinne der Erfindung bevorzugt, dass die erste Beschichtung anders ist als die zweite Beschichtung. Die Formulierung, dass die «erste Beschichtung anders ist als die zweite Beschichtung» bedeutet im Sinne der Erfindung bevorzugt, dass die Kontaktpartner der Energieversorgungsvorrichtungen unterschiedliche Beschichtungen aufweisen, d.h. dass sich die Beschichtungen unterscheiden. Der Unterschied kann beispielsweise auch darin bestehen, dass die Kontaktpartner der einen Energieversorgungsvorrichtung lediglich eine sehr rudimentäre bzw. sehr dünne Beschichtung aufweisen und die Kontaktpartner der anderen Energieversorgungsvorrichtung eine deutlich stärkere oder deutlich hochwertigere Beschichtung aufweisen.

Es ist im Sinne der Erfindung bevorzugt, dass die mindestens zwei ersten Kontaktpartner der ersten Energieversorgungsvorrichtung ein erstes Kontaktmaterial aufweisen und die mindestens zwei zweiten Kontaktpartner der zweiten Energieversorgungsvorrichtung ein zweites Kontaktmaterial aufweisen, wobei die Kontaktmaterialien die Beschichtungen der Kontaktpartner der Energieversorgungsvorrichtungen bilden können.

Die Beschichtung der Kontaktpartner kann beispielsweise Metall oder Metalllegierungen umfassen, wobei im Sinne der Erfindung beispielsweise auch Beschichtungen mit derselben Legierung, aber einer unterschiedlichen Zusammensetzung der Legierung als «unterschiedliche Beschichtungen» betrachtet werden. Unterschiedlich sind die Legierungs-Zusammensetzungen insbesondere dann, wenn sich der Anteil von mindestens einem Legierungspartner um mehr als 5 % unterscheidet. Wenn beispielsweise eine erste Beschichtung eine Legierung aus Palladium, Kupfer und Silizium umfasst mit einer Zusammensetzung von Pd75Cu15Si10, dann wäre eine zweite Beschichtung, die eine Legierung aus Palladium, Kupfer und Silizium mit einer Zusammensetzung von Pd60Cu30Si10 umfasst, im Sinne der Erfindung eine andere Legierung und eine andere Beschichtung als die erste Beschichtung. Wenn beispielsweise eine erste Beschichtung eine Legierung aus Palladium, Kupfer und Silizium umfasst mit einer Zusammensetzung von Pd75Cu15Si10, dann wäre eine zweite Beschichtung, die eine Legierung aus Palladium, Kupfer und Silizium mit einer Zusammensetzung von Pd72Cu17Si11 umfasst, aufgrund der geringen Unterschiede in der Zusammensetzung im Sinne der Erfindung bevorzugt eine gleiche Legierung und «dieselbe Beschichtung» wie die erste Beschichtung.

Die Beschichtungen können sich beispielsweise auch darin unterscheiden, dass eine der Energieversorgungsvorrichtungen eine Beschichtung aufweist und die andere Energieversorgungsvorrichtung eine sehr schwach ausgeprägte Beschichtung aufweist. Das Fehlen einer Beschichtung kann vorzugsweise im Sinne der Erfindung als Beschichtung mit anderen Eigenschaften betrachtet werden. In dieser Ausgestaltung der Erfindung kann der mindestens eine erste Kontaktpartner eine erste Beschichtung aufweisen und der mindestens eine zweite Kontaktpartner eine sehr schwache Beschichtung aufweisen, wobei das quasi Fehlen einer zweiten Beschichtung an dem mindestens einen zweiten Kontaktpartner im Sinne der Erfindung bevorzugt als «zweite Beschichtung mit unterschiedlichen Eigenschaften» betrachtet wird. Die Formulierung, dass «die Kontaktpartner der Energieversorgungsvorrichtungen unterschiedliche Beschichtungen aufweisen» ist dann im Sinne der Erfindung so zu verstehen, dass die ersten Kontaktpartner der ersten Energieversorgungsvorrichtung eine erste Beschichtung aufweisen und die zweiten Kontaktpartner der zweiten Energieversorgungsvorrichtung eine sehr schwache oder kaum nachzuweisende Beschichtung aufweisen. Mit anderen Worten kann es im Sinne der Erfindung bevorzugt sein, dass die ersten Kontaktpartner eine erste Beschichtung aufweisen und die zweiten Kontaktpartner eine zweite Beschichtung aufweisen, wobei sich die erste Beschichtung von der zweiten Beschichtung unterscheidet, oder dass die ersten Kontaktpartner eine erste Beschichtung aufweisen und die zweiten Kontaktpartner eine sehr schwach ausgeprägte zweite Beschichtung aufweisen.

Mit der Erfindung kann beispielsweise durch die Verwendung von Edelmetallbeschichtungen die Stromtragfähigkeit der Paare von Kontaktpartnern verbessert bzw. an individuelle Leistungsanforderungen angepasst werden. Durch die Vorsehung von Kontaktpartnern mit einer anderen oder einer sehr schwach ausgeprägten Beschichtung kann mit diesem Aspekt der Erfindung eine besonders kosteneffiziente und ressourcenschonende Energieversorgungsplattform für Werkzeugmaschinen bereitgestellt werden. Außerdem können die beschichteten Kontaktpartner besonders robust gegenüber mechanischen und/oder elektrischen Belastungen sein, so dass eine besonders robuste und langlebige Schnittstelle zwischen Werkzeugmaschine und Energieversorgungsvorrichtung bereitgestellt werden kann. Die Beschichtungen bzw. die Kontaktmaterialien können beispielsweise Metall oder Metall-Legierungen umfassen. Beispielsweise können die Beschichtungen bzw. die Kontaktmaterialien Nickel, Nickelphosphor, Silber, Palladium, Gold-Palladium oder viele andere Elemente oder Verbindungen umfassen.

Vorteilhafterweise kann auch mit diesem System eine Energieversorgungsplattform für Werkzeugmaschinen bereitgestellt werden, wobei die Werkzeugmaschinen mit unterschiedlichen Energieversorgungsvorrichtungen verbunden werden können, um von ihnen elektrische Energie zu beziehen. Dabei kann die Beschichtung der Kontaktpartner der Energieversorgungsvorrichtung nach den Bedürfnissen an elektrischer Energie, Stromwerte und/oder Spannungen ausgewählt werden, wobei beispielsweise eine erste Beschichtung die Übertragung von mehr Energie oder größeren Strömen ermöglichen kann als eine Energieversorgungsvorrichtung mit einer zweiten Beschichtung. Der Nutzer kann somit die Energieversorgungsvorrichtung entsprechend den Anforderungen der durchzuführenden Arbeiten auswählen. Vorteilhafterweise kann mit der Erfindung eine sehr flexible und leicht individuell anpassbare Energieversorgungsplattform bereitgestellt werden, die eine optimale Versorgung mit elektrischer Energie von Werkzeugmaschinen mit unterschiedlichen Leistungsanforderungen ermöglicht.

Auch in dieser Ausgestaltung der Erfindung können die Energieversorgungsvorrichtungen des Systems eine im Wesentlichen gleiche Nennspannung aufweisen. Die Energieversorgungsvorrichtungen können beispielsweise eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die Energieversorgungsvorrichtungen weisen jeweils mindestens eine Energiespeicherzelle auf, wobei die mindestens eine Energiespeicherzelle der Energieversorgungsvorrichtungen beispielsweise eine Spannung von 3,6 V aufweisen, ohne darauf beschränkt zu sein. Die Formulierung, dass die Energieversorgungsvorrichtungen des Systems im Wesentlichen gleiche Nennspannungen aufweisen, bedeutet im Sinne der Erfindung bevorzugt, dass die Energieversorgungsvorrichtungen hinsichtlich der bereitzustellenden Nennspannungen im Wesentlichen gleich ausgebildet sind. Dabei sollen aber kleineren Abweichungen beispielsweise im Bereich von +/- 3 Volt vorzugsweise auch als «im Wesentlichen gleiche Nennspannung» betrachtet werden, da beispielsweise Alterungseffekte oder unterschiedliche Ladungszustände der Energieversorgungsvorrichtungen dazu führen können, dass die Nennspannungen in einem geringen Maße voneinander abweichen, obwohl die Energieversorgungsvorrichtungen an sich, beispielsweise herstellungsbedingt, gleiche Nennspannungen aufweisen.

Beispielsweise kann es sich bei der ersten Beschichtung der Kontaktpartner der ersten Energieversorgungsvorrichtung um eine Beschichtung mit einer erhöhten Verschleißfestigkeit handeln, wobei die erste Energieversorgungsvorrichtung in diesem Fall vorzugsweise eine Energieversorgungsvorrichtung ist, die besonders hohe Abgabeströme zur Verfügung stellen kann und somit für die Energieversorgung von besonders leistungsstarken Werkzeugmaschinen gut geeignet ist. Mithin kann es sich bei der ersten Beschichtung in diesem Ausführungsbeispiel der Erfindung um eine besonders verschleißfeste, hochwertige Beschichtung handeln, die hohen Leistungsanforderungen gerecht wird und hohe elektrische Belastungen aushält. Insbesondere kann eine solche besonders verschleißfeste, hochwertige Beschichtung an neuartigen und verbesserten Energieversorgungsvorrichtungen zum Einsatz kommen, die sich insbesondere durch eine hohe Lebensdauer auszeichnen.

Beispielsweise kann es sich bei der zweiten Beschichtung der Kontaktpartner der zweiten Energieversorgungsvorrichtung um eine Beschichtung mit einer im Vergleich zu ersten Energieversorgungsvorrichtung reduzierten Verschleißfestigkeit handeln, wobei die zweite Energieversorgungsvorrichtung in diesem Fall vorzugsweise eine Energieversorgungsvorrichtung ist, die geringere Abgabeströme zur Verfügung stellen kann und somit für die Energieversorgung von kleineren, handlichen Werkzeugmaschinen gut geeignet ist. Mithin kann mit der zweiten Beschichtung in diesem Ausführungsbeispiel der Erfindung eine kostengünstige Alternative bereitgestellt werden, um größere Stückzahlen von Energieversorgungsvorrichtungen zu geringen Preisen in den Markt zu bringen.

Die Beschichtungen können sich auch dadurch unterscheiden, dass unterschiedliche Steckkräfte erforderlich sind, um die entsprechenden Kontaktpartner voneinander zu trennen oder sie zu verbinden. Beispielsweise können bei weniger leistungsstarken Energieversorgungsvorrichtungen Beschichtungen mit geringeren Steckkräften verwendet werden und bei leistungsstärkeren Energieversorgungsvorrichtungen solche Beschichtungen mit höheren Steckkräften. Dabei sind geringe Steckkräfte vorzugsweise mit einer verringerten Reibung zwischen den Kontaktpartnern verbunden, so dass es dem Nutzer leichter fällt, Werkzeugmaschine und Energieversorgungsvorrichtung miteinander zu verbinden oder voneinander zu trennen.

Es ist im Sinne der Erfindung bevorzugt, dass die Werkzeugmaschine Kontaktpartner aufweist, wobei die Kontaktpartner der Werkzeugmaschine eine Werkzeugmaschinen-Beschichtung aufweist, wobei die Werkzeugmaschinen-Beschichtung mit der ersten Beschichtung oder der zweiten Beschichtung der Kontaktpartner der Energieversorgungsvorrichtungen korrespondiert. Der Begriff «korrespondieren» bedeutet in diesem Kontext, dass die Kontaktpartner der Werkzeugmaschine ebenfalls eine Beschichtung aufweisen, die zur verschleißarmen Übertragung hoher Ströme ausgelegt ist, wenn die Werkzeugmaschine mit der ersten Energieversorgungsvorrichtung verbunden vorliegt. Analog können die Kontaktpartner der Werkzeugmaschine auch eine Beschichtung aufweisen, die zur Übertragung von geringeren Strömen ausgelegt ist, wenn die Werkzeugmaschine mit der zweiten Energieversorgungsvorrichtung verbunden vorliegt.

Es ist im Sinne der Erfindung bevorzugt, dass eine der Beschichtungen eine Beschichtung mit einer erhöhten Verschleißfestigkeit ist. Selbstverständlich können sich die Beschichtungen auch in anderen Merkmalen, wie der Zusammensetzung, der Farbe, dem Material, der Schichtdicke oder dergleichen unterscheiden, ohne darauf beschränkt zu sein.

Es ist im Sinne der Erfindung bevorzugt, dass der mindestens eine männliche Kontaktpartner an der Werkzeugmaschine angeordnet vorliegt. Die männlichen Kontaktpartner können Schwerter umfassen, die in einen weiblichen Kontaktpartner Energieversorgungsvorrichtungen eingeführt werden können. Entsprechend einer vorteilhaften Ausführungsform der vorliegenden Erfindung kann vorgesehen sein, dass die männlichen Kontaktpartner in Form von stiftartigen Steckern oder Schwertern und die weiblichen Kontaktpartner der Schnittstelle in Form von Klemmen mit elastisch verformbaren Schenkeln zur Aufnahme der stiftartigen Stecker oder Schwerter ausgestaltet sind. Der männliche Kontaktpartner kann von einem vorstehenden Bereich und einem Anschlag gebildet werden, wobei der vorstehende Bereich in einem gesteckten Zustand der Schnittstelle, in dem eine Energieversorgungsvorrichtung mit der Werkzeugmaschine verbunden vorliegt (daher auch: «verbundener Zustand»), in einem der weiblichen Kontaktpartner eingeführt vorliegt. Im unverbundenen Zustand können die Werkzeugmaschine und die Energieversorgungsvorrichtung unabhängig und voneinander getrennt vorliegen. Dies kann beispielsweise der Fall sein, wenn die Energieversorgungsvorrichtung aufgeladen wird und sich in einem Ladegerät zum Aufladen befindet.

Die Energieversorgungsvorrichtung kann vorzugsweise mindestens einen Akkumulator («Akku») umfassen, wobei die Energieversorgungsvorrichtung dazu eingerichtet ist, die Werkzeugmaschine mit elektrischer Energie zu versorgen. Die Abgabe von elektrischer Energie von der Energieversorgungsvorrichtung an die Werkzeugmaschine erfolgt insbesondere im verbundenen Zustand, in dem die Werkzeugmaschine über die Schnittstelle mit der Energieversorgungsvorrichtung verbunden vorliegt. Die weiblichen und männlichen Kontaktpartner greifen im verbundenen Zustand ineinander, so dass über einen Kontaktbereich zwischen den Kontaktpartner elektrischer Strom bzw. elektrische Energie fließen kann.

Es ist im Sinne der Erfindung bevorzugt, dass der mindestens eine weibliche Kontaktpartner an der Energieversorgungsvorrichtung angeordnet vorliegt. Der mindestens eine weibliche Kontaktpartner kann vorzugsweise von einer Aufnahmeklemme gebildet werden, die dazu eingerichtet ist, das Schwert des männlichen Kontaktpartners aufzunehmen. Der weibliche Kontaktpartner kann dazu zwei Schenkel aus einem elastischen Material aufweisen, wobei die Schenkel bei der Einführung des männlichen Kontaktpartners auseinandergedrückt werden, so dass der männliche Kontaktpartner in einem Innenraum des weiblichen Kontaktpartners bzw. der Aufnahmeklemme zu liegen kommt. In diesem Fall wird im Sinne der Erfindung von dem verbundenen oder gesteckten Zustand der Schnittstelle gesprochen. Aufgrund der Elastizität des Materials, aus dem die Schenkel des weiblichen Kontaktpartners gebildet sind, drücken sich die Schenkel der Aufnahmeklemme des weiblichen Kontaktpartners in diesem verbundenen Zustand an das Schwert bzw. den vorstehenden Bereich des männlichen Kontaktpartners, so dass ein Kontaktbereich zwischen den Kontaktpartner geschaffen wird. Vorzugsweise wird elektrischer Strom bzw. elektrische Energie über diesen Kontaktbereich zwischen den Kontaktpartnern ausgetauscht, so dass Strom bzw. elektrische Energie von der Energieversorgungsvorrichtung in Richtung der Werkzeugmaschine fließen kann. Die Schenkel des weiblichen Kontaktpartners können vorzugsweise Federstahl umfassen oder auf diesem gefertigt sein.

Es ist im Sinne der Erfindung bevorzugt, dass die Schenkel des weiblichen Kontaktpartners bzw. der Aufnahmeklemme im Kontaktbereich einen minimalen Abstand aufweisen, um einen besonders guten Kontakt zu dem männlichen Kontaktpartner zu ermöglichen. Vorzugsweise weist der weibliche Kontaktpartner im Kontaktbereich zum männlichen Kontaktpartner eine Verjüngung auf, die durch den minimalen Abstand zwischen den Schenkeln des weiblichen Kontaktpartners definiert wird. Es ist im Sinne der Erfindung bevorzugt, dass die Schenkel des weiblichen Kontaktpartners Kupfer aufweisen oder mit einer Kupferschicht beschichtet sind. Durch das Kupfer kann der Stromfluss bzw. der Fluss von elektrischer Energie von der Energieversorgungsvorrichtung an die Werkzeugmaschine weiter optimiert werden, so dass insbesondere auch hohe Ströme, wie beispielsweise 50 Ampère, 70 Ampère oder 100 und mehr Ampère durch die Schnittstelle fließen können. Bei den Strömen kann es sich vorzugsweise um Konstant-Ströme handeln.

Dadurch, dass die Energieversorgungsvorrichtung lösbar durch die Schnittstelle mit der Werkzeugmaschine verbunden ist, liegen die jeweiligen elektrischen Kontakte der Werkzeugmaschine sowie der Energieversorgungsvorrichtung vorzugsweise kraftschlüssig aneinander an. Der weibliche Kontaktpartner kann dabei eine bevorzugt federnd gelagerte Klammer oder Aufnahmeklemme umfassen, während der männliche Kontaktpartner ein in die Klammer oder die Aufnahmeklemme einführbares Einschubelement aufweisen kann.

Es ist im Sinne der Erfindung bevorzugt, dass die Schnittstelle eine Aufnahmevorrichtung zur Aufnahme des mindestens einen weiblichen Kontaktpartners umfasst. Mit anderen Worten kann es im Sinne der Erfindung bevorzugt sein, dass die weiblichen Kontaktpartner einzeln an der Schnittstelle angeordnet vorliegen oder dass sie Bestandteil einer Aufnahmevorrichtung sind, wobei die einzelnen weiblichen Kontaktpartner oder die Aufnahmevorrichtung entweder Bestandteile der Werkzeugmaschine oder der Energieversorgungsvorrichtung sein können. Es ist im Sinne der Erfindung am allermeisten bevorzugt, dass die einzelnen weiblichen Kontaktpartner oder die Aufnahmevorrichtung Bestandteile der Energieversorgungsvorrichtung sind/ist. Die Aufnahmevorrichtung kann eine Schublade bilden, in der die weiblichen Kontaktpartner aufgenommen werden können. Es kann auf diese Weise vorteilhafterweise ein Kontaktblock bereitgestellt werden, so dass sich die weiblichen Kontaktpartner gemeinsam bewegen bzw. gemeinsam bewegt werden können. Vorzugsweise kann die die Aufnahmevorrichtung einen bis acht, bevorzugt zwei bis sechs und am meisten bevorzugt vier weibliche Kontaktpartner aufnehmen.

Es ist im Sinne der Erfindung bevorzugt, dass mindestens ein Kontaktpartner angefedert ist. Dabei kann es sich um einen Kontaktpartner der Werkzeugmaschine und/oder der Energieversorgungsvorrichtung handeln, wobei die Werkzeugmaschine und die Energieversorgungsvorrichtung als Verbindungspartner der Schnittstelle bezeichnet werden können. Wenn die Werkzeugmaschine und/oder der Energieversorgungsvorrichtung mehr als einen Kontaktpartner aufweisen, ist es im Sinne der Erfindung bevorzugt, dass alle Kontaktpartner eines Verbindungspartners angefedert vorliegen. Beispielsweise kann die Werkzeugmaschine vier Kontaktpartner aufweisen, wobei alle vier Kontaktpartner angefedert sind. Beispielsweise kann die Energieversorgungsvorrichtung zwei Kontaktpartner aufweisen, wobei beide Kontaktpartner angefedert sind. Die Kontaktpartner können vorzugsweise männliche und/oder weibliche Kontaktpartner sein. Die Anfederung erfolgt vorzugsweise dadurch, dass die Kontaktpartner über ein elastisches Mittel zur Anfederung mit der Werkzeugmaschine und/oder der Energieversorgungsvorrichtung verbunden sind. Die Anfederung kann vorzugsweise dadurch erreicht werden, dass die angefederten Kontaktpartner ein elastisches Mittel zur Anfederung umfassen, wobei das elastische Mittel zur Anfederung dazu eingerichtet ist, den jeweiligen Kontaktpartner mit dem entsprechenden Verbindungspartner der Schnittstelle zu verbinden. Wenn beispielsweise alle Kontaktpartner der Werkzeugmaschine und/oder der Energieversorgungsvorrichtung angefedert sind, so weisen vorzugsweise alle Kontaktpartner ein solches elastisches Mittel zur Anfederung auf. Eine solche Anfederung wird im Sinne der Erfindung bevorzugt als «Einzel-Anfederung» bezeichnet.

Es ist im Sinne der Erfindung bevorzugt, dass die Werkzeugmaschinen und/oder die Energieversorgungsvorrichtungen mindestens eine Aufnahmevorrichtung zur Aufnahme von mindestens einem Kontaktpartner aufweisen. Wenn einer der Verbindungspartner der Schnittstelle eine Aufnahmevorrichtung aufweist, kann diese Aufnahmevorrichtung angefedert sein. Das bedeutet im Sinne der Erfindung bevorzugt, dass die Aufnahmevorrichtung mit einem elastischen Mittel zur Anfederung mit der Werkzeugmaschine und/oder der Energieversorgungsvorrichtung verbunden vorliegen kann. Es ist im Sinne der Erfindung bevorzugt, dass alle Kontaktpartner einer Werkzeugmaschine und/oder einer Energieversorgungsvorrichtung in einer Aufnahmevorrichtung angeordnet vorliegen können. Beispielsweise kann die Werkzeugmaschine vier Kontaktpartner aufweisen, wobei alle vier Kontaktpartner in einer Aufnahmevorrichtung aufgenommen vorliegen. Beispielsweise kann die Energieversorgungsvorrichtung zwei Kontaktpartner aufweisen, wobei beide Kontaktpartner in einer Aufnahmevorrichtung aufgenommen vorliegen. Es kann aber im Sinne der Erfindung auch bevorzugt sein, dass eine der Werkzeugmaschinen und/oder eine der Energieversorgungsvorrichtungen mehr als eine Aufnahmevorrichtung aufweisen kann. Wenn die Werkzeugmaschine beispielsweise vier Kontaktpartner aufweist, kann die Werkzeugmaschine beispielsweise zwei Aufnahmevorrichtungen aufweisen, wobei jede Aufnahmevorrichtung zwei Kontaktpartner aufnimmt. In diesem Ausführungsbeispiel der Erfindung ist es bevorzugt, dass beide Aufnahmevorrichtungen einzeln angefedert sind, indem sie jeweils ein elastisches Mittel zur Anfederung aufweisen. Wenn die Energieversorgungsvorrichtung beispielsweise zwei Kontaktpartner aufweist, kann die Energieversorgungsvorrichtung beispielsweise zwei Aufnahmevorrichtungen aufweisen, wobei jede Aufnahmevorrichtung einen Kontaktpartner aufnimmt. In diesem Ausführungsbeispiel der Erfindung ist es bevorzugt, dass beide Aufnahmevorrichtungen einzeln angefedert sind, indem sie jeweils ein elastisches Mittel zur Anfederung aufweisen. Die Aufnahmevorrichtung kann vorzugsweise einen Kontakt(mittel)block bilden, wobei die Anfederung in diesem Ausführungsbeispiel der Erfindung vorzugsweise blockweise erfolgt.

Es ist im Sinne der Erfindung bevorzugt, dass das mindestens eine elastische Mittel Anfederung der Aufnahmevorrichtung - vorzugsweise als Ganzes - zugeordnet ist. In diesem Fall kann beispielsweise eine Aufnahmevorrichtung, die zum Beispiel vier weibliche Kontaktpartner aufnehmen kann, mit einem elastischen Element mit dem entsprechenden Systembestandteil - Werkzeugmaschine oder Energieversorgungsvorrichtung - verbunden vorliegen. Die Entkopplung findet dann beispielsweise zwischen der Energieversorgungsvorrichtung und der Aufnahmevorrichtung statt, so dass die weiblichen Kontaktpartner in der Aufnahmevorrichtung von den Bewegungen und/oder Schwingungen der Energieversorgungsvorrichtung und/oder der Werkzeugmaschine entkoppelt bzw. vor ihnen geschützt sind. Tests haben gezeigt, dass die Verwendung einer Aufnahmevorrichtung besonders gut vor Kippbewegungen schützt und dass das Reibmoment zwischen den Kontakten erheblich erhöht wird. Die Aufnahmevorrichtung mit den Leistungskontakten kann vorzugsweise einen Kontaktblock bilden, wobei durch die Erfindung dieser bevorzugt beweglich gelagerte bzw. angefederte Kontaktblock besonders gut vor Kippbewegungen u.Ä. geschützt wird. Dieser Vorteil der Erfindung kann dadurch erreicht werden, dass Abstützflächen und die Reibkräfte der einzelnen Klemmkontakte der weiblichen Kontaktpartner seitlich bzw. im Wesentlichen senkrecht zur Einschubrichtung weit voneinander beabstandet sind und somit durch den großen Hebelarm der Lagerung dynamische Kippmomente sehr gut aufgenommen werden können. Gleiches gilt für die Abstützflächen eines Kontakblocks, wenn die weiblichen Kontaktpartner von einer Aufnahmevorrichtung aufgenommen werden. Das eben Gesagte gilt analog auch für männliche Kontaktpartner, insbesondere dann, wenn sie von einer Aufnahmevorrichtung aufgenommen werden und einen Kontaktblock bilden.

Durch die Vorsehung der elastischen Mittel zur Anfederung kann auf einfache Art und Weise an den Kontaktpartnern wirkenden Vibrationen und Erschütterungen ausgeglichen werden, die zu einer Relativbewegung und sogar zu einer tatsächlichen Unterbrechung der Kontaktverbindung zwischen dem Akkumulator und der Werkzeugmaschine führen können.

Die Anfederung der Kontaktpartner der Schnittstelle hat mehrere vorteilhafte Effekte. Ein erster Effekt betrifft die Relativbewegungen bzw. die Relativwege zwischen den Kontaktpartnern, die die form- und/oder kraftschlüssige Verbindung zwischen Werkzeugmaschine und Energieversorgungsvorrichtung erzeugen. Diese Relativbewegungen bzw. die Relativwege können unerwünschterweise den Übergangswiderstand der Schnittstelle erhöhen, wobei diese Erhöhung zunächst unabhängig von dem Verschleißzustand der Schnittstelle ist. Das bedeutet im Sinne der Erfindung bevorzugt, dass die erhöhten Übergangswiderstände auch bereits im Neuzustand eines Systems aus Werkzeugmaschine und Energieversorgungsvorrichtung auftreten können, wenn es in der Schnittstelle zwischen den Systembestandteilen zu unerwünschten Relativbewegungen der Kontaktpartner der Schnittstelle kommt. Darüber hinaus können die Relativbewegungen zwischen den Kontaktpartnern zu Verschleiß und später Oxidation führen, so dass der Übergangswiderstand der Schnittstelle nachteiligerweise weiter steigen kann. Insbesondere kann ein Verschleiß der edlen Schichten der Kontaktpartner auftreten, welcher später zu atmosphärischer Oxidation unter Einbeziehung des Luftsauerstoffs und/oder zu Reiboxidation führt. Indem die Erfindung die Relativbewegungen zwischen den Kontaktpartnern und damit den Übergangswiderstand erheblich vermindert, leistet sie einen wesentlichen Beitrag dazu, dass mit der vorgeschlagenen Schnittstelle besonders große elektrische Ströme von der Energieversorgungsvorrichtung an die Werkzeugmaschine übertragen werden können. Außerdem vermindert die Erfindung einen unerwünschten Verschleiß der Kontaktpartner und leistet somit einen ebenso wertvollen Beitrag zur Erhöhung der Lebensdauer der Schnittstelle.

Es ist im Sinne der Erfindung bevorzugt, dass die elastischen Mittel zur Anfederung zu einer mechanischen Entkopplung zwischen Energieversorgungsvorrichtung und Einheit aus männlichen und weiblichen Kontaktpartner führen. Alternativ können die elastischen Mittel zu einer mechanischen Entkopplung zwischen Werkzeugmaschine und Einheit aus männlichen und weiblichen Kontaktpartner führen. Aufgrund der mechanischen Entkopplung wird eine etwaige unerwünschte Relativbewegung zwischen den Kontaktpartnern nicht übertragen, sondern vorteilhafterweise von dem elastischen Mittel kompensiert.

Die Verbesserung des Übergangswiderstands führt vorteilhafterweise zu einer erhöhten Stromtragfähigkeit der Schnittstelle, so dass mit der Erfindung Werkzeugmaschinen in größeren Leistungsklassen, d.h. besonders leistungsstarke Werkzeugmaschinen, betrieben bzw. mit elektrischer Energie versorgt werden können. Die Verringerung der Verlustleistung im Übergangswiderstand kann vorteilhafterweise zu einer reduzierten thermischen Belastung der umgebenden Bauteile führen. Insbesondere Bauteile aus thermoplastischem Material können dadurch wirksam vor Beschädigungen durch zu große Wärmeeinwirkung geschützt werden.

Es ist im Sinne der Erfindung bevorzugt, dass derjenige Kontaktpartner, an dem das elastische Mittel zur Anfederung angreift, beweglich gelagert ist. Mit anderen Worten kann derjenige Kontaktpartner, mit dem das elastische Mittel zur Anfederung wirkverbunden ist, beweglich gelagert sein. Es ist im Sinne der Erfindung bevorzugt, dass der beweglich gelagerte Kontaktpartner und/oder die beweglich gelagerte Aufnahmevorrichtung angefedert ist. Wenn mehr als ein Kontaktpartner pro Verbindungspartner der Schnittstelle vorhanden ist oder wenn die Werkzeugmaschine und/oder die Energieversorgungsvorrichtung mehr als eine Aufnahmevorrichtungen aufweisen, kann es im Sinne der Erfindung bevorzugt sein, dass die beweglich gelagerten Kontaktpartner und/oder die beweglich gelagerten Aufnahmevorrichtungen angefedert sind. Auf diese Weise können die Relativbewegungen zwischen den Kontaktpartnern und der Übergangswiderstand weiter erheblich vermindert und die Lebensdauer der Schnittstelle erheblich verlängert werden. Darüber hinaus kann es bevorzugt sein, dass das elastische Mittel zur Anfederung an eine Aufnahmevorrichtung angreift. Die Aufnahmevorrichtung kann männliche und/ oder weibliche Leistungskontakte aufnehmen und ebenfalls beweglich gelagert sein. Die Aufnahmevorrichtung ist insbesondere dann beweglich gelagert, wenn sie mit dem mindestens einen elastischen Mittel zur Anfederung wirkverbunden ist bzw. wenn diese elastischen Mittel an der Aufnahmevorrichtung angreifen. Die Formulierung, dass das mindestens eine elastische Mittel zur Anfederung dazu eingerichtet ist, an dem mindestens einen männlichen Kontaktpartner oder an dem mindestens einen weiblichen Kontaktpartner anzugreifen, bedeutet im dem Ausführungsbeispiel der Erfindung, bei dem einzelne Kontaktpartner in einer Aufnahmevorrichtung angeordnet vorliegen, bevorzugt, dass das mindestens eine elastische Mittel Anfederung dazu eingerichtet ist, an der Aufnahmevorrichtung, in der einzelne Kontaktpartner enthalten sind, anzugreifen. Die Aufnahmevorrichtung kann einen Kontaktblock bzw. einen Kontaktmittelblock bilden, der mit Hilfe der elastischen Mittel beweglich bzw. angefedert gelagert sein kann. Es ist im Sinne der Erfindung bevorzugt, dass die Aufnahmevorrichtung die Kontaktpartner eines Verbindungspartners der Schnittstelle, also Werkzeugmaschine oder Energieversorgungsvorrichtung, umfasst. Es kann allerdings im Sinne der Erfindung auch bevorzugt sein, dass mehrere Aufnahmevorrichtungen vorgesehen sind, die jeweils eine Teilmenge der Kontaktpartner eines Verbindungspartners aufnehmen können. Vorzugsweise können auch dieses mehreren Aufnahmevorrichtungen dadurch angefedert sein, dass das elastische Mittel zur Reduzierung der Relativbewegung an diesen mehreren Aufnahmevorrichtungen angreift.

Vorzugsweise ist derjenige Kontaktpartner, an dem das elastische Mittel zur Anfederung angreift, im verbundenen Zustand relativ zur Werkzeugmaschine oder relativ zur Energieversorgungsvorrichtung beweglich gelagert. Wenn die Anfederung auf Seiten der Werkzeugmaschine erfolgt, d.h. das mindestens eine elastische Mittel an den Kontaktpartner bzw. der Aufnahmevorrichtung der Werkzeugmaschine angreift, führt die so ausgestaltete Anfederung im Bereich der Werkzeugmaschine vorzugsweise dazu, dass der entsprechende Kontaktpartner im verbundenen Zustand relativ zur Werkzeugmaschine beweglich gelagert ist. Wenn die Anfederung auf Seiten der Energieversorgungsvorrichtung erfolgt, d.h. das mindestens eine elastische Mittel an den Kontaktpartner bzw. der Aufnahmevorrichtung der Energieversorgungsvorrichtung angreift, führt die so ausgestaltete Anfederung im Bereich der Energieversorgungsvorrichtung vorzugsweise dazu, dass der entsprechende Kontaktpartner im verbundenen Zustand relativ zur Energieversorgungsvorrichtung beweglich gelagert ist.

Die Formulierung, wonach das elastische Mittel zur Anfederung dazu eingerichtet ist, an dem mindestens einen männlichen Kontaktpartner und/oder an dem mindestens einen weiblichen Kontaktpartner anzugreifen, umfasst zum einen die Möglichkeit, dass das elastische Mittel an einer der Gruppen von Kontaktpartnern angreift, beispielsweise an allen Kontaktpartnern, die an der Energieversorgungsvorrichtung angeordnet vorliegen, oder an allen Kontaktpartnern, die an der Werkzeugmaschine angeordnet vorliegen. Es kann aber im Sinne der Erfindung auch bevorzugt sein, dass sowohl die Werkzeugmaschine, als auch die Energieversorgungsvorrichtung elastische Mittel zur Anfederung ihrer Kontaktpartner umfassen. In dieser Ausgestaltung der Erfindung greift das elastische Mittel an dem mindestens einen männlichen Kontaktpartner und an dem mindestens einen weiblichen Kontaktpartner an. Wenn eine oder beide Gruppen der Kontaktpartner in einer Aufnahmevorrichtung angeordnet vorliegen, kann das elastische Mittel an einer der Aufnahmevorrichtungen angreifen. Wenn die Kontaktpartner von sowohl der Energieversorgungsvorrichtung, als auch der Werkzeugmaschine eine Aufnahmevorrichtung aufweisen, kann das elastische Mittel auch an beiden Aufnahmevorrichtungen angreifen. Ein Angreifen an sowohl den Kontaktpartnern der Werkzeugmaschine, als auch an den Kontaktpartnern der Energieversorgungsvorrichtung kann beispielsweise dadurch realisiert werden, dass bei einem der Verbindungspartner - Energieversorgungsvorrichtung oder Werkzeugmaschine - eine harte Feder verwendet wird und beim anderen Verbindungspartner - Werkzeugmaschine oder Energieversorgungsvorrichtung - eine weiche(re) Feder.

Das mindestens eine elastische Mittel zur Anfederung kann vorzugsweise mindestens ein elastisches Element, wie eine Feder, umfassen. Das elastische Element kann dabei in Form einer Feder und insbesondere einer Spiral-, Biege- oder Schraubenfeder ausgestaltet sein. Alternativ kann das elastische Element als ein Bauteil aus einem elastisch verformbaren Werkstoff ausgestaltet ist. Als Werkstoff ist dabei auch ein Elastomer möglich. Hierdurch kann auf einfache Art und Weise einer vibrationsbedingten Bewegung des Anschlusselements in mehreren Richtungen, d.h. nicht nur in der Richtung zu oder entgegen dem Anschlusselement, entgegengewirkt werden. Darüber hinaus können die unerwünschten Relativbewegungen zwischen den Kontaktpartnern der Schnittstelle durch die Verwendung eines elastischen Elements wirksam verkürzt werden.

Es ist im Sinne der Erfindung bevorzugt, dass der männliche Kontaktpartner beim Eindringen in den weiblichen Kontaktpartner das mindestens eine elastische Mittel zusammendrückt, so dass das elastische Mittel in einen Spannungszustand gebracht werden. Das Zusammendrücken kann vorzugsweise eine elastische Verformung oder eine Kompression darstellen. Vorzugsweise werden die Begriffe «Zusammendrücken», «Kompression» und «elastische Verformung», sowie die entsprechenden Verben im Kontext der vorliegenden Erfindung synonym verwendet. Das Zusammendrücken des elastischen Mittels führt vorteilhafterweise zu dem Spannungszustand. Alternativ oder ergänzend kann auch der mindestens eine männliche Kontaktpartner angefedert sein. Der Begriff «Anfederung» ist im Sinne der Erfindung so zu verstehen, dass der angefederte Kontaktpartner mit den elastischen Mitteln zu Reduzierung der Relativbewegungen zwischen den Kontaktpartnern wirkverbunden ist. Mit anderen Worten können die elastischen Mittel zur Anfederung an einem der Kontaktpartner angreifen, wodurch vorteilhafterweise eine Anfederung des entsprechenden Kontaktpartners erreicht wird. Es ist im Sinne der Erfindung bevorzugt, dass das mindestens eine elastische Mittel in dem eingeschobenen, verbundenen bzw. verriegelten Zustand, in dem die Energieversorgungsvorrichtung und die Werkzeugmaschine miteinander verbunden vorliegen, in einem Spannungs- oder gespannten Zustand vorliegt. Es ist im Sinne der Erfindung bevorzugt, dass die elastischen Mittel auch im nichtverbauten Zustand vorgespannt sind, wobei dadurch ein Kraftfluss innerhalb der Energieversorgungsvorrichtung geschlossen wird. Der mindestens eine weibliche Kontaktpartner kann sich dadurch auf der Energieversorgungsvorrichtung abstützen. Durch die Spannung des mindestens einen elastischen Mittels zur Reduzierung der Relativbewegung zwischen den Kontaktpartnern, insbesondere im verbundenen Zustand des Kontaktsystems, werden die männlichen und die weiblichen Kontaktpartner fest aneinander gedrückt, so dass sich ein besonders guter Kontakt zwischen den Kontaktpartnern ausbildet. Aufgrund dieser «angefederten» Kontaktierung der Kontaktpartner bzw. aufgrund des besonders engen Kontakts der Kontaktpartner kann die Leistungsdichte des erzeugten Kontakts erheblich erhöht werden, so dass mithin eine Übertragung von elektrischen Konstant-Strömen in einem Bereich von mehr als 50 Ampère, bevorzugt mehr als 70 Ampère oder besonders bevorzugt mehr als 100 Ampère ermöglicht wird. Außerdem kann die Lebenszeit des vorgeschlagenen Kontaktsystems wesentlich verlängert werden, so dass das vorgeschlagene Kontaktsystem besonders gut für Energieversorgungsvorrichtungen mit langen Lebenszeiten und/oder hohen Abgabeströmen geeignet ist, weil die höheren mechanischen und/oder elektrischen Anforderungen an eine Schnittstelle durch die Erfindung optimal erfüllt werden können.

Es ist im Sinne der Erfindung bevorzugt, dass beim Verbinden der Energieversorgungsvorrichtung mit der Werkzeugmaschine die Energieversorgungsvorrichtung in beispielsweise einen Hohlraum der Werkzeugmaschine eingeführt wird. Um die elektrische Verbindung zwischen den Verbindungspartnern «Energieversorgungsvorrichtung» und «Werkzeugmaschine» herzustellen, werden in einem ersten Schritt die Kontaktpartner miteinander in Kontakt gebracht. Das passiert vorzugsweise dadurch, dass die Schwerter der männlichen Kontaktpartner in die Aufnahmeklemmen der weiblichen Kontaktpartner eingeführt werden. Dieser Vorgang wird im Sinne der Erfindung bevorzugt auch als «Zusammenschieben der Kontaktpartner» bezeichnet. Es ist im Sinne der Erfindung insbesondere bevorzugt, dass der oder die beweglich gelagerte(n) Kontaktpartner auf den oder die ortsfesten Kontaktpartner geschoben werden, wobei das Spiel bzw. die Bewegungsfreiheit durch die Erfindung vorteilhafterweise im Bereich des beweglich gelagerten Kontaktpartners gewährt wird. Anschließend wird in einem zweiten Schritt das mindestens eine elastische Mittel gespannt, beispielsweise dadurch, dass das elastische Element, zusammengedrückt bzw. elastisch verformt wird. Daran anschließend können zusätzliche mechanische Befestigungs- oder Verriegelungsmechanismen greifen, beispielsweise das Verriegelungselemente einrasten oder in dafür vorgesehenen Ausbuchtungen, Gegenkonturen, Vertiefungen oder Hinterschnitten zu liegen kommen. Es ist im Sinne der Erfindung insbesondere bevorzugt, dass die Spannung des elastischen Elements im verriegelten Zustand vorliegt. Mit anderen Worten kann das elastische Element insbesondere dann zusammengedrückt vorliegen, wenn die Energieversorgungsvorrichtung mit der Werkzeugmaschine verbunden ist. Auch das vorteilhafte Spiel und die Bewegungsfreiheit der angefederten Kontaktpartner bzw. der angefederten Aufnahmevorrichtung(en) sind vorzugsweise im verbundenen Zustand vorhanden. Es ist im Sinne der Erfindung bevorzugt, dass die Verriegelung der Energieversorgungsvorrichtung in der Werkzeugmaschine in einem Kraftfluss der Schnittstelle liegt.

Mithin wird im Kontext der vorliegenden Erfindung ein Verfahren zur Verbindung einer Energieversorgungsvorrichtung mit einer Werkzeugmaschine offenbart, wobei das Verfahren durch folgende Verfahrensschritt gekennzeichnet ist:
a) Zusammenschieben der Kontaktpartner der Energieversorgungsvorrichtung und der Werkzeugmaschine,
b) Spannung des mindestens einen elastischen Mittels zur Anfederung,
c) Einrasten etwaiger Verriegelungselemente, um die Energieversorgungsvorrichtung stabil in der Werkzeugmaschine zu befestigen.

In einem zweiten Aspekt betrifft die Erfindung eine Energieversorgungsvorrichtung zur Verwendung in dem vorgeschlagenen System. Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben. Es ist im Sinne der Erfindung bevorzugt, dass die Energieversorgungsvorrichtung in einem der vorgeschlagenen System verwendet werden kann.

Die Energieversorgungsvorrichtung kann vorzugsweise einen Akkumulator oder eine bevorzugt wiederaufladbare Batterie aufweisen. Selbstverständlich ist es im Sinne der Erfindung auch möglich, dass die Energieversorgungsvorrichtung zwei oder mehr Akkus und/oder Batterien aufweist. Die Akkus und/oder Batterien können sog. Batteriepacks aufweisen, die beispielsweise zylindrische Zellen umfassen. Diese zylindrischen Zellen können beispielsweise eine chemische Substanz umfassend Lithium-Ionen, Magnesium-Ionen und/oder Natrium-Ionen enthalten, ohne darauf beschränkt zu sein. Es können aber auch anderen Zelltypen, beispielsweise mit quaderder würfelförmigen Zellen im Kontext der vorliegenden Erfindung zum Einsatz kommen.

Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben. Die besonders hohe Lebensdauer kann vorzugsweise dazu führen, dass die Energieversorgungsvorrichtung besonders viele Einschubvorgänge bzw. Einschubzyklen übersteht, ohne zu verschleißen. Darüber hinaus kann die besonders hohe Lebensdauer bedeuten, dass die chemischen Bestandteile der Energieversorgungsvorrichtung dazu eingerichtet sind, häufiger als bisherige Energieversorgungsvorrichtungen aufgeladen werden zu können, ohne wesentlich zu altern. Ein wesentlicher Vorteil des vorgeschlagenen Kontaktsystems besteht darin, dass mit ihm solche leistungsstarken Energieversorgungsvorrichtungen sicher und einfach verbunden werden können. Insbesondere ist das vorgeschlagene Kontaktsystem aufgrund der Anfederung durch die elastischen Mittel in der Lage, höhe Ströme zu übertragen und dabei während der gesamten Lebensdauer der Energieversorgungsvorrichtungen eingesetzt werden zu können, ohne zu verschleißen. Dadurch können die Vorteile neuer Zell- und Batterietechnologien mit Hilfe der Erfindung optimal ausgenutzt werden. Mithin kann mit der Erfindung ein Kontaktsystem aus Werkzeugmaschine und Energieversorgungsvorrichtung bereitgestellt werden, dass einen effizienten Einsatz von Energieversorgungsvorrichtungen in batteriebetriebenen Werkzeugmaschine ermöglicht, dies insbesondere auch für Applikationen und Anwendungen, die sehr hohe elektrische Leistungsanforderungen und/oder sehr hohe Lebensdaueranforderungen an das System bzw. seine Schnittstelle stellen.

Es ist im Sinne der Erfindung bevorzugt, dass die Energieversorgungsvorrichtung mindestens einer Zelle umfasst, wobei die mindestens eine Zelle weist einen Innenwiderstand DCR_I von kleiner als 10 Milliohm (mOhm) auf. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden · Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen ä fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A der mindestens einen Zelle ist größer ist als beispielsweise das Achtfache der dritten Wurzel des Quadrats des Volumens V kann vorzugsweise auch durch die Formel ***A***>8****V***^(**2**/**3**) zum Ausdruck gebracht werden. In einer anderen Schreibweise kann dieser Zusammenhang dadurch beschrieben werden, dass das Verhältnis A/V von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Zellgeometrien, die beispielsweise die Relation von ***A***>8****V***^(**2**/**3**) erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80 · t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 · t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung des Systems aus Werkzeugmaschine und Energieversorgungsvorrichtung
- Fig. 2: Ansicht einer weiteren bevorzugten Ausgestaltung des Systems aus Wer kzeugmaschine und Energieversorgungsvorrichtung
- Fig. 3: mögliche Ausgestaltung einer Einheit aus weiblichem und männlichem Kontaktpartner
- Fig. 4: schematische Darstellung einer möglichen Ausgestaltung der Kontaktpartner mit unterschiedlichen Beschichtungen
- Fig. 5: Darstellung eines möglichen Ablaufs der Verbindung von Energieversorgungsvorrichtung und Werkzeugmaschine
- Fig. 6: Darstellung verschiedener Kombinationen von Anfederungen und Anordnungen der Kontaktpartner
- Fig. 7: Darstellung verschiedener Anordnungen der Kontaktpartner und ihre Belegungen
- Fig. 8: Darstellung verschiedener Ausführungsformen der Aufnahmevorrichtung

### Ausführungsbeispiele und Figurenbeschreibung:

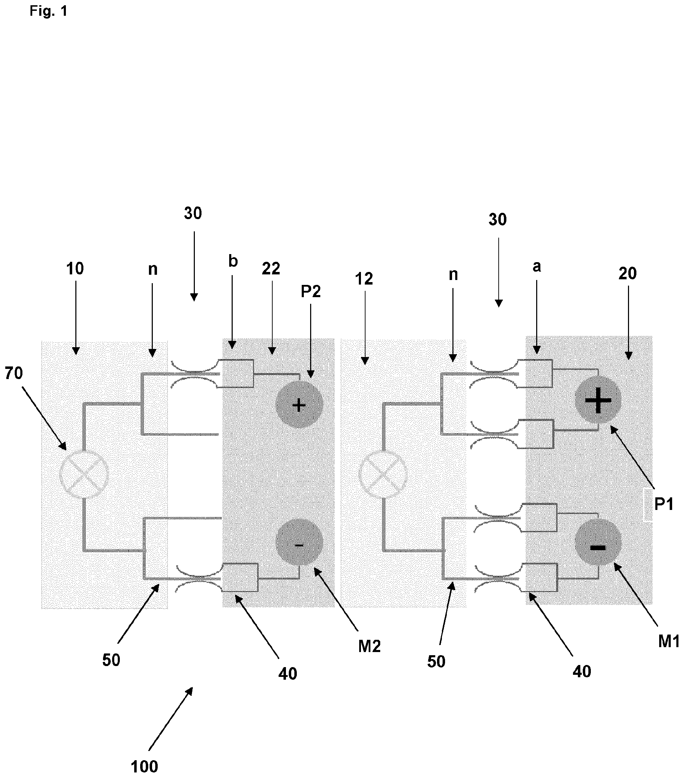

Figur 1 zeigt eine mögliche Ausgestaltung des Systems 100 aus zwei Werkzeugmaschinen 10, 12 und zwei Energieversorgungsvorrichtungen 20, 22. In dem in Fig. 1 dargestellten Ausführungsbeispiel der Erfindung sind zwei Werkzeugmaschinen 10,12 und die erste Energieversorgungsvorrichtungen 20 und die zweite Energieversorgungsvorrichtungen 22 abgebildet. Die erste Werkzeugmaschine 10 und die zweite Werkzeugmaschine 12 weisen je vier männliche Kontaktpartner 50 auf, die in Paaren angeordnet sind. Die männlichen Kontaktpartner 50 sind Bestandteil einer Schnittstelle 30, wobei die Schnittstelle 30 darüber hinaus auch weibliche Kontaktpartner 40 aufweist. In dem in Fig. 1 dargestellten Ausführungsbeispiel der Erfindung liegen die weiblichen Kontaktpartner 40 an den Energieversorgungsvorrichtungen 20, 22 angeordnet vor. Die weiblichen Kontaktpartner 40 können Einzelkontakte darstellen oder in einem Block oder eine Schublade integriert vorliegen. Der Block oder die Schublade mit den weiblichen Kontaktpartnern 40 wird als Aufnahmevorrichtung bezeichnet. Die Werkzeugmaschinen 10, 12 und die Energieversorgungsvorrichtungen 20, 22 können zusammen ein System 100 bilden, wobei die Energieversorgungsvorrichtungen 20, 22 dazu eingerichtet sind, die Werkzeugmaschinen 10, 12 mit elektrischer Energie zu versorgen.

Die Werkzeugmaschinen 10, 12 weisen Verbraucher 70 auf, die beispielsweise von einem Motor der Werkzeugmaschine 10, 12 gebildet werden können. Die den Energieversorgungsvorrichtungen 20, 22 weisen je einen Pluspol P1, P2 und einen Minuspol M1, M2 auf, wobei der erste Pluspol P1 und der erste Minuspol M1 an der ersten Energieversorgungsvorrichtung 20 und der zweite Pluspol P2 und der zweite Minuspol M2 an der zweiten Energieversorgungsvorrichtung 22 angeordnet vorliegen. Die Kontaktpartner der Werkzeugmaschinen 10, 12 werden mit dem Buchstaben n gekennzeichnet, während die Kontaktpartner der ersten Energieversorgungsvorrichtung 20 mit dem Buchstaben a und die Kontaktpartner der zweiten Energieversorgungsvorrichtung 22 mit dem Buchstaben b gekennzeichnet werden. In dem in Fig. 1 dargestellten Ausführungsbeispiel der Erfindung weisen die Werkzeugmaschinen 10, 12 je vier Kontaktpartner n auf, wobei die erste Werkzeugmaschine 10 mit einer zweiten Energieversorgungsvorrichtung 22 verbunden vorliegt, die lediglich zwei Kontaktpartner b aufweist. Somit bleiben zwei Kontaktpartner n der ersten Werkzeugmaschine 10 ungenutzt und es kann weniger Strom bzw. elektrische Energie von der zweiten Energieversorgungsvorrichtung 22 an die erste Werkzeugmaschine 10 übertragen werden als von der ersten Energieversorgungsvorrichtung 20 an die zweite Werkzeugmaschine 12 (rechte Bildhälfte). Die erste Energieversorgungsvorrichtung 20 weist vier Kontaktpartner a auf, so dass jeder Kontaktpartner a der ersten Energieversorgungsvorrichtung 20 mit einem Kontaktpartner n der zweiten Werkzeugmaschine 12 verbunden vorliegt. Damit kann ein höherer Strom oder mehr elektrische Energie übertragen werden als bei der Kombination der ersten Werkzeugmaschine 10 mit der zweiten Energieversorgungsvorrichtung 22 auf der linken Bildhälfte.

Vorzugsweise ist jeder Pol P1, P2, M1, M2 der Energieversorgungsvorrichtungen 20, 22 mit je mindestens einem Kontaktpartner a, b verbunden. Beispielsweise ist innerhalb der zweiten Energieversorgungsvorrichtung 22 sowohl der Pluspol P2, als auch der Minuspol M2 mit einem weiblichen Kontaktpartner 50 verbunden. Innerhalb der ersten Energieversorgungsvorrichtung 20 ist sowohl der erste Pluspol P1, als auch der erste Minuspol M1 mit zwei weiblichen Kontaktpartnern verbunden.

Auch wenn in Fig. 1 dargestellt ist, dass die männlichen Kontaktpartner 50 an den Werkzeugmaschinen 10 angeordnet vorliegen und die weiblichen Kontaktpartner 40 an den Energieversorgungsvorrichtungen 20, 22, so kann auch eine gespiegelte Anordnung möglich sein, bei der die männlichen Kontaktpartner 50 an den Energieversorgungsvorrichtungen 20, 22 angeordnet vorliegen und die weiblichen Kontaktpartner 40 an den Werkzeugmaschinen 10, 12.

In dem in Fig. 1 dargestellten Ausführungsbeispiel der Erfindung wird ein System 100 umfassend zwei Werkzeugmaschine 10, 12 und eine erste Energieversorgungsvorrichtung 20 und eine zweite Energieversorgungsvorrichtung 22 abgebildet, wobei die erste Energieversorgungsvorrichtung 20 und die zweite Energieversorgungsvorrichtung 22 zur Versorgung der Werkzeugmaschine 10 mit elektrischer Energie eingerichtet sind. Die Energieversorgungsvorrichtungen 20, 22 können über eine Schnittstelle 30 lösbar mit den Werkzeugmaschinen 10, 12 verbunden werden, wobei die Schnittstelle 30 mindestens einen weiblichen Kontaktpartner 40 und einen männlichen Kontaktpartner 50 umfasst. Die Werkzeugmaschinen 10, 12 weisen mindestens zwei Kontaktpartner, hier vier, zur Übertragung von elektrischer Energie von den Energieversorgungsvorrichtungen 20, 22 an die Werkzeugmaschinen 10, 12 auf, wobei die erste Energieversorgungsvorrichtung 20 vier weibliche Kontaktpartner a zur Übertragung von elektrischer an die zweite Werkzeugmaschine 12 aufweist, wobei die vier weiblichen Kontaktpartner a mit den männlichen Kontaktpartnern n der zweiten Werkzeugmaschine 12 korrespondieren. Die zweite Energieversorgungsvorrichtung 22 weist zwei weibliche Kontaktpartner b zur Übertragung von elektrischer Energie an die erste Werkzeugmaschine 10 auf, wobei die zwei weiblichen Kontaktpartner b der zweiten Energieversorgungsvorrichtung 22 mit den männlichen Kontaktpartnern n der ersten Werkzeugmaschine 10 korrespondieren.

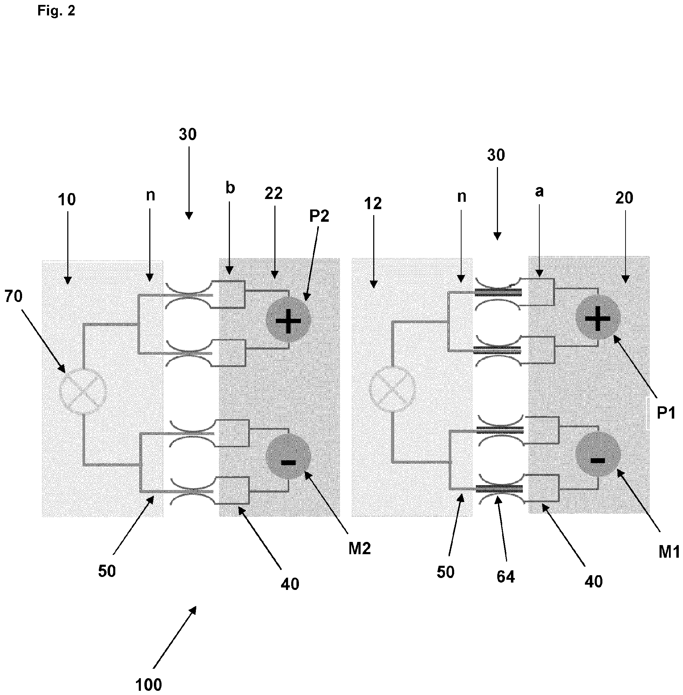

Fig. 2 zeigt eine Ansicht einer weiteren bevorzugten Ausgestaltung des Systems 100 aus Werkzeugmaschinen 10, 12 und Energieversorgungsvorrichtungen 20, 22. In dem in Fig. 2 dargestellten Ausführungsbeispiel der Erfindung ist jeder Pol P1, P2, M1, M2 der Energieversorgungsvorrichtungen 20, 22 mit je zwei weiblichen Kontaktpartnern 40 verbunden, wobei jeder der weiblichen Kontaktpartner 50 der Energieversorgungsvorrichtungen 20, 22 mit je einem männlichen Kontaktpartner 50 einer der Werkzeugmaschinen 10, 12 verbunden vorliegt. Bei diesem Ausführungsbeispiel der Erfindung werden somit alle vorhandenen Kontaktpartner n der Werkzeugmaschinen 10, 12 genutzt, um elektrische Energie von den Energieversorgungsvorrichtungen 20, 22 zu erhalten.

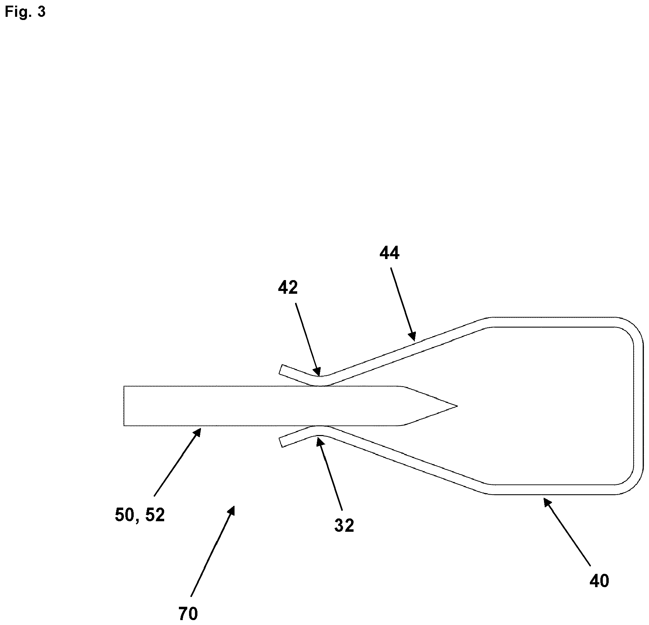

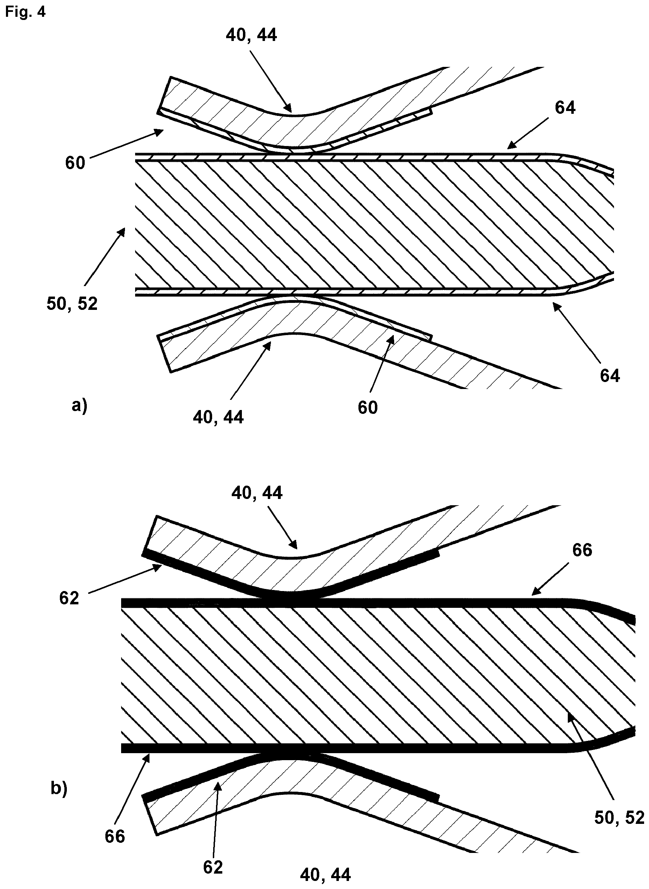

In dem in Fig. 2 dargestellten Ausführungsbeispiel der Erfindung weisen die Schwerter 52 (siehe Fig. 3) der männlichen Kontaktpartner 50 der zweiten Werkzeugmaschine 12 eine Werkzeugmaschinen-Beschichtung 64 auf. Dabei kann es sich beispielsweise um eine Beschichtung 64 mit einer hohen Verschleißfestigkeit handeln. In dem in Fig. 2 dargestellten Ausführungsbeispiel der Erfindung weisen die Kontaktpartner 50 der ersten Werkzeugmaschine 10 keine Beschichtung auf. Es ist im Kontext der Erfindung insbesondere vorgesehen, dass die Kontaktpartner a, b der Energieversorgungsvorrichtungen 20, 22 Beschichtungen 60, 62 aufweisen. Eine solche erste Beschichtung 60 der ersten Energieversorgungsvorrichtung 20 und eine solche zweite Beschichtung 62 der zweiten Energieversorgungsvorrichtung 22 ist beispielsweise schematisch in Fig. 4 dargestellt. Die Beschichtungen 60, 62, 64 sind vorzugsweise dazu eingerichtet, die Kontaktpartner 40, 50 robuster und widerstandsfähiger gegenüber mechanischen und/oder elektrischen Belastungen zu machen.

Fig. 3 zeigt eine mögliche Ausgestaltung einer Einheit aus einem weiblichem Kontaktpartner 40 und einem männlichem Kontaktpartner 50. Dargestellt ist in Fig. 3 insbesondere eine Schnittstelle 30, die einen weiblichen Kontaktpartner 40 und einen männlichen Kontaktpartner 50 aufweist. Insbesondere zeigt Fig. 3 einen verbundenen Zustand, bei dem die Energieversorgungsvorrichtung 20 und die Werkzeugmaschine 10 miteinander verbunden vorliegen, so dass Strom bzw. elektrische Energie von der Energieversorgungsvorrichtung 20 in Richtung der Werkzeugmaschine 10 fließen kann. Das Schwert 52 des männlichen Kontaktpartners 50 befindet sich in der Aufnahmeklemme 44 bzw. den Schenkeln 44 des weiblichen Kontaktpartners 40 angeordnet vor, wobei die Kontaktpartner 40, 50 miteinander einen Kontaktbereich 32 bilden, über den der Strom bzw. die elektrische Energie von der Energieversorgungsvorrichtung 20 an die Werkzeugmaschine 10 übertragen werden kann. Der Kontaktbereich 32 bildet sich insbesondere im Bereich einer Verjüngung 42 des weiblichen Kontaktpartners 40 aus, in dem die Schenkel 44 bzw. die Komponenten der Aufnahmeklemme 44 des weiblichen Kontaktpartners 40 einen minimalen Abstand zu einander einnehmen. Dadurch legen sich die Schenkel 44 des weiblichen Kontaktpartners 40 besonders eng an das Schwert 52 des männlichen Kontaktpartners 50 an.

Fig. 4 zeigt eine schematische Darstellung einer möglichen Ausgestaltung eines weiblichem Kontaktpartners 40 und eines männlichen Kontaktpartners 50 mit unterschiedlichen Beschichtungen. Beispielsweise ist in der oberen Bildhälfte von Fig. 4 ein Stromübertragungs-Paar aus einem weiblichen Kontaktpartner 40 und einem männlichen Kontaktpartner 50 dargestellt, wobei der weibliche Kontaktpartner 40 eine erste Beschichtung 60 aufweist und der männliche Kontaktpartner 50 eine erste Werkzeugmaschinen-Beschichtung 64. Die erste Beschichtung 60 des weiblichen Kontaktpartners 40 liegt vorzugsweise an den Innenseiten der Kontaktarme 44 des weiblichen Kontaktpartners 40 vor. Die erste Werkzeugmaschinen-Beschichtung 64 des männlichen Kontaktpartners 50 liegt vorzugsweise auf einer Oberfläche des Schwerts 52 des männlichen Kontaktpartners 50 vor. Selbstverständlich können auch die weiblichen Kontaktpartner 40 an der Werkzeugmaschine 10 vorliegen und dann entsprechend eine «Werkzeugmaschinen-Beschichtung» 64, 66 aufweisen. Darüber hinaus können auch die männlichen Kontaktpartner 50 an der Energieversorgungsvorrichtung 20 vorliegen und dann entsprechend eine erste Beschichtung 60 oder eine zweite Beschichtung 62 aufweisen.

In der unteren Bildhälfte von Fig. 4 ist ein Stromübertragungs-Paar aus einem weiblichen Kontaktpartner 40 und einem männlichen Kontaktpartner 50 dargestellt, wobei der weibliche Kontaktpartner 40 eine zweite Beschichtung 62 aufweist und der männliche Kontaktpartner 50 eine zweite Werkzeugmaschinen-Beschichtung 66. Die zweite Beschichtung 62 des weiblichen Kontaktpartners 40 liegt vorzugsweise an den Innenseiten der Kontaktarme 44 des weiblichen Kontaktpartners 40 vor. Die zweite Werkzeugmaschinen-Beschichtung 66 des männlichen Kontaktpartners 50 liegt vorzugsweise auf einer Oberfläche des Schwerts 52 des männlichen Kontaktpartners 50 vor.

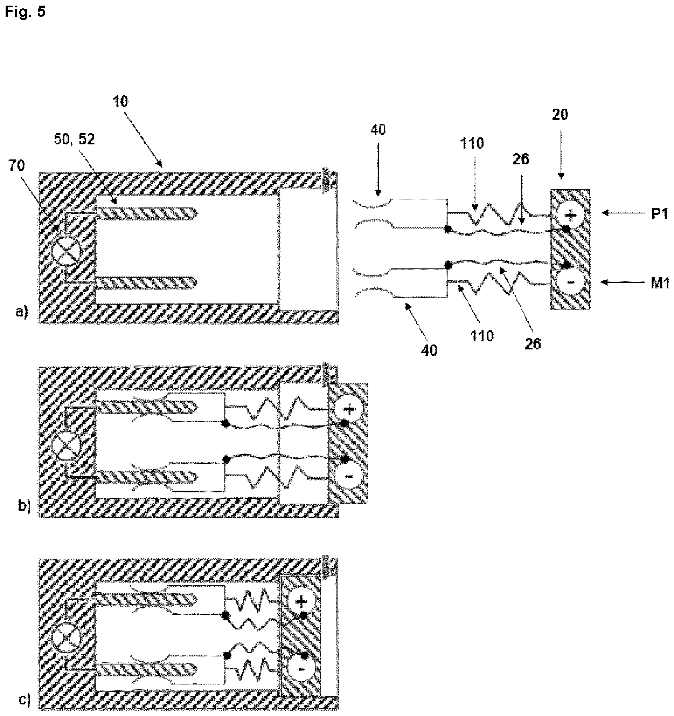

Fig. 5 zeigt einen möglichen Ablauf der Verbindung von Energieversorgungsvorrichtung 20 und Werkzeugmaschine 10. Fig. 5 umfasst drei Teilfiguren a), b) und c), wobei Teilfigur 5a) die Energieversorgungsvorrichtung 20 und Werkzeugmaschine 10 in einem getrennten Zustand zeigt, in dem die Energieversorgungsvorrichtung 20 und Werkzeugmaschine 10 getrennt voneinander vorliegen. Teilfigur 5b) zeigt Energieversorgungsvorrichtung 20 und Werkzeugmaschine 10 in dem Moment, in dem die Kontaktpartner 40, 50 der Energieversorgungsvorrichtung 20 und der Werkzeugmaschine 10 zusammen- oder aufeinandergeschoben vorliegen, wobei die elastischen Mittel 110 zur Anfederung in dem in Fig. 5b) gezeigten Zustand noch nicht elastisch verformt sind. Das bedeutet, dass die elastischen Mittel 110 zur Anfederung in dem in Fig. 5b) gezeigten Zustand noch nicht gespannt sind, so dass noch keine Anfederung der Kontaktpartner 40, 50 vorliegt. In Teilfigur 5c) ist zu erkennen, dass die elastischen Mittel 110 zur Anfederung nun zusammengedrückt, d.h. gespannt sind. Dieser Zustand entspricht vorzugsweise dem verriegelten Zustand, in dem die Energieversorgungsvorrichtung 20 und die Werkzeugmaschine 10 miteinander verbunden sind und in dem die Energieversorgungsvorrichtung 20 die Werkzeugmaschine 10 mit elektrischer Energie versorgen kann.

Die Energieversorgungsvorrichtung 20 weist einen Pluspol P1 und einen Minuspol M1 auf, wobei je ein Pol P1, M1 über je einen Stromleiter 26 mit einem Kontaktpartner, hier einem weiblichen Kontaktpartner 50, verbunden vorliegen kann. Bei den Stromleitern 26 kann es sich vorzugsweise um eine elastische Stromverbindung 26 zwischen den in dem in Fig. 5 angefederten weiblichen Kontaktpartnern 40 und der Energieversorgungseinheit 20 handeln. Ein elastisch ausgebildeter Stromleiter 26 ist vorteilhafterweise besonders gut dazu geeignet, die Beweglichkeit der Kontaktpartner 40, 50 zu unterstützen, so dass eine optimale Entkopplung der Kontaktpartner 40, 50 gewährleistet werden kann. Es kann im Sinne der Erfindung bevorzugt sein, dass der bevorzugt elastisch ausgebildete Stromleiter 26 eine Zopflitze umfasst oder von ihr gebildet wird. Vorzugsweise umfasst der bevorzugt elastisch ausgebildete Stromleiter 26 mehrere Einzeldrähte, die vorzugsweise miteinander verzwirbelt vorliegen können. Beispielsweise kann es im Sinne der Erfindung bevorzugt sein, dass der bevorzugt elastisch ausgebildete Stromleiter 26 mehr als zehn Einzeldrähte aufweist. Die elastischen Mittel 110 zur Anfederung verbinden vorzugsweise die Kontaktpartner, hier die weiblichen Kontaktpartner 40, mit der Energieversorgungsvorrichtung 20. Die Werkzeugmaschine 10 kann einen Verbraucher 70 aufweisen, bei dem es sich beispielsweise um den Motor der Werkzeugmaschine 10 handeln kann. Die Bezugszeichen sind in Fig. 5 nur für Teilfigur 5a) angegeben, gelten aber für die Teilfiguren 5b) und 5c) analog.

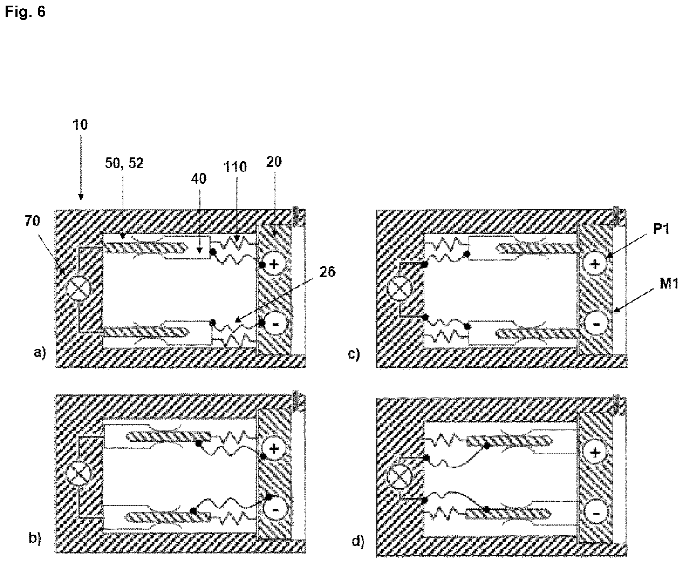

Fig. 6 zeigt verschiedene Kombinationen von Anfederungen und Anordnungen der Kontaktpartner 40, 50. Fig. 6 umfasst vier Teilfiguren a), b), c) und d), wobei bei dem in Teilfigur 6a) dargestellten Ausführungsbeispiel der Erfindung zwei männliche Kontaktpartner 50 mit ihren Schwertern 52 an der Werkzeugmaschine 10 angeordnet vorliegen. Die Werkzeugmaschine 10 kann einen Verbraucher 70, zum Beispiel einen Motor, umfassen. Die Teilfiguren von Fig. 6 zeigen die Werkzeugmaschine 10 und die Energieversorgungsvorrichtung 20 jeweils im verbundenen Zustand. Bei dem in Teilfigur 6a) dargestellten Ausführungsbeispiel der Erfindung liegen die weiblichen Kontaktpartner 40 an der Energieversorgungsvorrichtung 20 vor, wobei die dargestellte Energieversorgungsvorrichtung 20 insbesondere zwei weibliche Kontaktpartner 40 aufweist. In dem in Teilfigur 6a) dargestellten Ausführungsbeispiel der Erfindung korrespondiert somit die Anzahl der weiblichen Kontaktpartner 40 mit der Anzahl der männlichen Kontaktpartner 50. Das bedeutet in diesem Zusammenhang vorzugsweise, dass die Werkzeugmaschine 10 und die Energieversorgungsvorrichtung 20 gleich viele Kontaktpartner 40, 50 aufweisen, wobei die in Teilfigur 6a) abgebildete Werkzeugmaschine 10 zwei männliche Kontaktpartner 50 und die in Teilfigur 6a) abgebildete Energieversorgungsvorrichtung 20 zwei weibliche Kontaktpartner 40 aufweist. Die Energieversorgungsvorrichtung 20 weist zwei Pole P1, M1 auf, nämlich einen Pluspol P1 und einen Minuspol M1. Die Pole P1, M1 der Energieversorgungsvorrichtung 20 sind über je einen bevorzugt elastisch ausgebildeten Stromleiter 26 mit den Kontaktpartnern 40 verbunden, wobei die Kontaktpartner der Energieversorgungsvorrichtung 20 in Teilfigur 6a) weibliche Kontaktpartner 40 sind. In dem in Teilfigur 6a) dargestellten Ausführungsbeispiel der Erfindung liegt die Anfederung im Bereich, d.h. auf Seiten der Energieversorgungsvorrichtung 20 vor. In den in den Teilfigur 6a) und 6d) dargestellten Ausführungsbeispielen der Erfindung liegen die männlichen Kontaktpartner 50 jeweils an der Werkzeugmaschine 10, während die weiblichen Kontaktpartner 40 mit der Energieversorgungsvorrichtung 20 verbunden vorliegen. Die Bezugszeichen sind in Fig. 6 nur für Teilfigur 6a) angegeben, gelten aber für die übrigen Teilfiguren der Figur 6 analog.

Teilfigur 6b) zeigt ein Ausführungsbeispiel der Erfindung, bei dem die Werkzeugmaschine 10 weibliche Kontaktpartner 40 aufweist und die Energieversorgungsvorrichtung 20 männliche Kontaktpartner 50. Auch hier weisen sowohl Werkzeugmaschine 10, als auch Energieversorgungsvorrichtung 20 jeweils zwei Kontaktpartner 40, 50 auf. Die Schwerter 52 der männlichen Kontaktpartner 50 sind in dem in Teilfigur 6b) dargestellten Ausführungsbeispiel der Erfindung jeweils über ein elastisches Mittel 110 zur Anfederung mit der Energieversorgungsvorrichtung 20 verbunden, während die Schwerter darüber hinaus elektrisch über einen Stromleiter 26 mit je einem Pol P1, M1 der Energieversorgungsvorrichtung 20 verbunden vorliegen. Auch in dem in Teilfigur 6b) dargestellten Ausführungsbeispiel der Erfindung liegt die Anfederung im Bereich, d.h. auf Seiten der Energieversorgungsvorrichtung 20 vor.

In den in den Teilfigur 6c) und 6d) dargestellten Ausführungsbeispielen der Erfindung liegt die Anfederung jeweils im Bereich, d.h. auf Seiten der Werkzeugmaschine 10 vor. Teilfigur 6c) zeigt ebenfalls ein Ausführungsbeispiel der Erfindung, bei dem die Werkzeugmaschine 10 weibliche Kontaktpartner 40 aufweist und die Energieversorgungsvorrichtung 20 männliche Kontaktpartner 50 aufweist. Die weiblichen Kontaktpartner 40 sind über einen Stromleiter 26 leitend mit der Werkzeugmaschine 10 verbunden, wobei die elektrische Verbindung insbesondere zwischen den weiblichen Kontaktpartnern 40 und dem Verbraucher 70 der Werkzeugmaschine 10 besteht. Die weiblichen Kontaktpartner 40 sind darüber hinaus über elastische Mittel 110 zur Anfederung mit der Werkzeugmaschine 10 verbunden. Im Bereich der Energieversorgungsvorrichtung 20 sind die männlichen Kontaktpartner 50, insbesondere ihre Schwerter 52, mit je einem Pol P1, M1 der Energieversorgungsvorrichtung 20 verbunden. Die Energieversorgungsvorrichtung 20 weist zwei männliche Kontaktpartner 50 auf, wobei jedem Pol P1, M1 der Energieversorgungsvorrichtung 20 genau ein männlicher Kontaktpartner 50 zugeordnet werden kann.

Teilfigur 6d) zeigt ein Ausführungsbeispiel der Erfindung, bei dem die Werkzeugmaschine 10 männliche Kontaktpartner 50 aufweist und die Energieversorgungsvorrichtung 20 weibliche Kontaktpartner 40 aufweist. Die Anfederung, d.h. die elastischen Mittel 110 zur Anfederung, liegt bei dem in Teilfigur 6d) dargestellten Ausführungsbeispiel der Erfindung im Bereich der Werkzeugmaschine 10 vor. Die Werkzeugmaschine 10 ist über die elastischen Mittel 110 zur Anfederung mit je einem männlichen Kontaktpartner 50 bzw. seinem Schwert 52 verbunden. Darüber hinaus besteht bei dem in Teilfigur 6d) dargestellten Ausführungsbeispiel der Erfindung eine stromleitende Verbindung zwischen dem Verbraucher 70 der Werzeugmaschine 10 und den männlichen Kontaktpartnern 50. Die stromleitende Verbindung zwischen dem Verbraucher 70 der Werkzeugmaschine 10 und den männlichen Kontaktpartnern 50 kann insbesondere von einem Stromleiter 26 bewirkt werden. Die Energieversorgungsvorrichtung 20 bei dem in Teilfigur 6d) dargestellten Ausführungsbeispiel der Erfindung weisst zwei weibliche Kontaktpartner 40 auf, wobei je ein weiblicher Kontaktpartner 40 der Energieversorgungsvorrichtung 20 einem der beiden Pole P1, M1 der Energieversorgungsvorrichtung 20 zugeordnet werden kann.

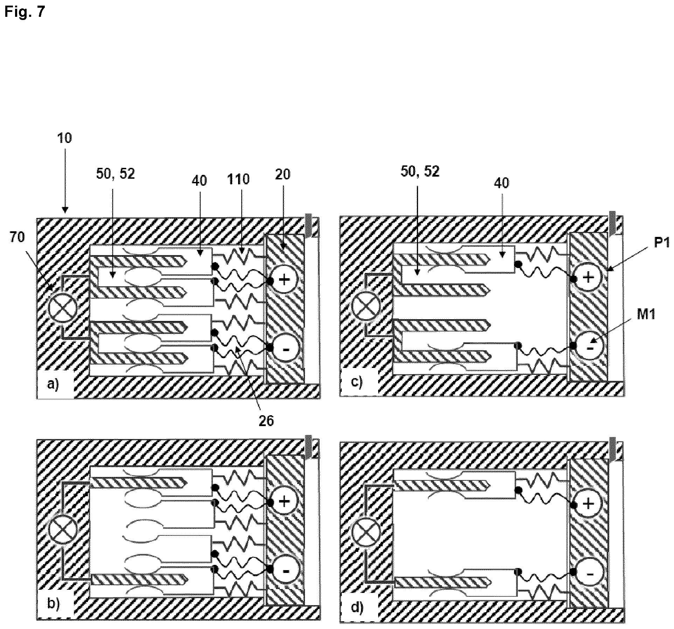

Fig. 7 zeigt verschiedene Anordnungen der Kontaktpartner 40, 50 und ihre Belegungen. Fig. 7 umfasst vier Teilfiguren a), b), c) und d), wobei bei dem in Teilfigur 7a) eine Werkzeugmaschine 10 mit vier männlichen Kontaktpartner 50 und eine Energieversorgungsvorrichtung 20 mit vier weiblichen Kontaktpartnern 40 dargestellt ist. Die männlichen Kontaktpartner 50 der Werkzeugmaschine 10 sind leitend mit einem Verbraucher 70 der Werkzeugmaschine 10 verbunden, um diesen mit elektrischer Energie, die die Werkzeugmaschine 10 der Energieversorgungsvorrichtung 20 erhält, zu versorgen. Die weiblichen Kontaktpartner 40 der Energieversorgungsvorrichtung 20 sind über je einen Stromleiter mit einem Pol P1, M1 der Energieversorgungsvorrichtung 20 verbunden, wobei in dem in Teilfigur 7a) dargestellten Ausführungsbeispiel der Erfindung zwei weibliche Kontaktpartner 40 mit dem Pluspol P1 der Energieversorgungsvorrichtung 20 und zwei andere weibliche Kontaktpartner 40 mit dem Minuspol M1 der Energieversorgungsvorrichtung 20 verbunden sind. Darüber hinaus sind die weiblichen Kontaktpartner 40 über ein elastisches Mittel 110 zur Anfederung mit der Energieversorgungsvorrichtung 20 verbunden. Die Anfederung erfolgt in allen Teilfiguren der Fig. 7 auf Seiten der Energieversorgungsvorrichtung 20. Darüber hinaus ist allen Teilfiguren der Fig. 7 gemein, dass die männlichen Kontaktpartner 50 an der Werkzeugmaschine 10 vorliegen, während die weiblichen Kontaktpartner 40 an der Energieversorgungsvorrichtung 20 angeordnet vorliegen. Die Teilfiguren der Figuren 7 unterscheiden sich allerdings in der Anzahl der jeweils vorhandenen Kontaktpartner 40, 50 und der

Anzahl der Stromübertragungs-Paare, die jeweils gebildet werden können. In dem in Teilfigur 7a) dargestellten Ausführungsbeispiel der Erfindung sind beispielsweise vier Stromübertragungs-Paare aus je einem weiblichen Kontaktpartner 40 und einem männlichen Kontaktpartner 50 abgebildet. Bei vier Stromübertragungs-Paaren kann ein Potential der Energieversorgungsvorrichtung 20 besonders gut genutzt und eine große Menge elektrische Energie von der Energieversorgungsvorrichtung 20 an die Werkzeugmaschine 10 übertragen werden. Beispielsweise können Ströme von mehr als 50 A, bevorzugt mehr als 70 A und am meisten bevorzugt von mehr als 100 A mit einer solchen Schnittstelle 30 übertragen werden. Bei den Strömen handelt es sich vorzugsweise um Konstant-Ströme. Die Bezugszeichen sind in Fig. 7 nur für Teilfigur 7a) angegeben, gelten aber für die übrigen Teilfiguren der Figur 7 analog

In dem in Teilfigur 7b) dargestellten Ausführungsbeispiel der Erfindung sind beispielsweise zwei Stromübertragungs-Paare aus je einem weiblichen Kontaktpartner 40 und einem männlichen Kontaktpartner 50 abgebildet, während zwei weibliche Kontaktpartner 40 der Energieversorgungsvorrichtung 20 nicht belegt sind, d.h. ungenutzt oder «leer» bleiben. Bei dem in Teilfigur 7b) dargestellten Ausführungsbeispiel der Erfindung kann aufgrund der geringeren Anzahl von Stromübertragungs-Paaren weniger Strom von der Energieversorgungsvorrichtung 20 an die Werkzeugmaschine 10 übertragen werden als bei dem in Teilfigur 7a) dargestellten Ausführungsbeispiel der Erfindung, bei dem die Schnittstelle 30 vier Stromübertragungs-Paare umfasst. Bei dem in Teilfigur 7b) dargestellten Ausführungsbeispiel der Erfindung weist die Energieversorgungsvorrichtung 20 vier weibliche Kontaktpartner 40 auf, aber die Werkzeugmaschine 10 lediglich zwei männliche Kontaktpartner 50.

In dem in Teilfigur 7c) dargestellten Ausführungsbeispiel der Erfindung sind ebenfalls zwei Stromübertragungs-Paare aus je einem weiblichen Kontaktpartner 40 und einem männlichen Kontaktpartner 50 abgebildet, während zwei männliche Kontaktpartner 50 der Werkzeugmaschine 10 nicht mit einem weiblichen Kontaktpartner 40 verbunden sind. Bei dem in Teilfigur 7c) dargestellten Ausführungsbeispiel der Erfindung kann aufgrund der geringeren Anzahl von Stromübertragungs-Paaren weniger Strom von der Energieversorgungsvorrichtung 20 an die Werkzeugmaschine 10 übertragen werden als bei dem in Teilfigur 7a) dargestellten Ausführungsbeispiel der Erfindung, bei dem die Schnittstelle 30 vier Stromübertragungs-Paare umfasst. Bei dem in Teilfigur 7c) dargestellten Ausführungsbeispiel der Erfindung weist die Werkzeugmaschine 10 vier männliche Kontaktpartner 50 auf, aber die Energieversorgungsvorrichtung 20 lediglich zwei weibliche Kontaktpartner 40.

Bei dem in Teilfigur 7d) dargestellten Ausführungsbeispiel der Erfindung weist die Werkzeugmaschine 10 zwei männliche Kontaktpartner 50 auf und die Energieversorgungsvorrichtung 20 zwei weibliche Kontaktpartner 40. Dadurch können zwei dargestellten Ausführungsbeispiel der Erfindung sind beispielsweise zwei Stromübertragungs-Paare gebildet werden und die Menge der zu übertragenden Energie bzw. die Größe der Ströme, die übertragen werden kann, entspricht den in den Teilfigur 7b) und 7c) dargestellten Ausführungsbeispielen der Erfindung.

Bei den in den Fig. 5 bis 7 dargestellten Ausführungsbeispielen der Erfindung wird jeweils eine Einzel-Anfederung gezeigt, d.h. dass auf Seiten des Verbindungspartners der Schnittstelle 30, bei dem die Anfederung erfolgt, jeder Kontaktpartner 40, 50 ein elastisches Mittel 110 zur Anfederung aufweist. Das bedeutet, dass die Kontaktpartner 40, 50 einzeln angefedert sind.

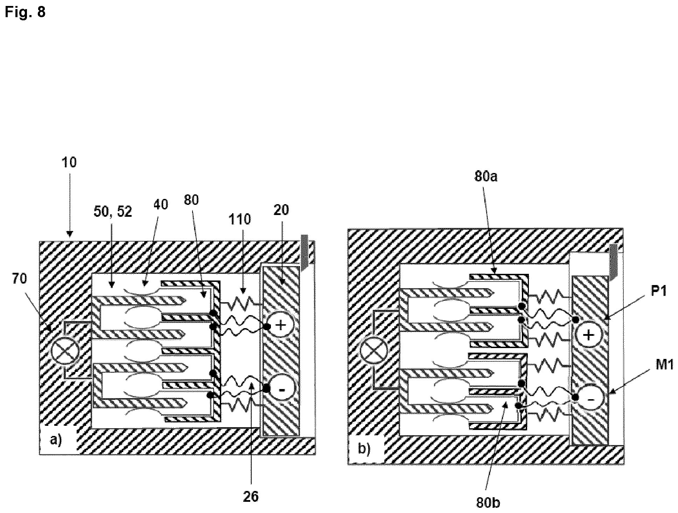

In Fig. 8 sind Aufnahmevorrichtungen 80 dargestellt, die bei dem in Teilfigur 8a) dargestellten Ausführungsbeispiel der Erfindung die vier weiblichen Kontaktpartner 40 der Energieversorgungsvorrichtung 20 umfasst. Die weiblichen Kontaktpartner 40 liegen in bekannter Weise mit den Schwertern 52 der männlichen Kontaktpartner 50 wirkverbunden vor, so dass Stromübertragungs-Paare gebildet werden, wobei in dem in Teilfigur 8a) dargestellten Ausführungsbeispiel der Erfindung vier Stromübertragungs-Paare gebildet werden. Die in Teilfigur 8a) dargestellte Aufnahmevorrichtung 80 ist Bestandteil der Energieversorgungsvorrichtung 20 und über vier Stromleiter 26 mit den Polen P1, M1 der Energieversorgungsvorrichtung 20 verbunden, sowie mechanisch über zwei elastische Mittel 60 zur Anfederung mit der Energieversorgungsvorrichtung 20. Die Aufnahmevorrichtung 80 bildet vorzugsweise einen Kontaktblock, der mit einer bestimmten Anzahl elastischer Mittel 110 zur Anfederung als Block angefedert werden kann.

Bei dem in Teilfigur 8b) dargestellten Ausführungsbeispiel der Erfindung sind zwei Aufnahmevorrichtungen 80 dargestellt, wobei je zwei weibliche Kontaktpartner 40 in einer Aufnahmevorrichtung 80 vorliegen. Jede der beiden Aufnahmevorrichtungen 80 ist über zwei elastische Mittel 110 zur Anfederung mit der Energieversorgungsvorrichtung 20 verbunden, sowie mit zwei Stromleitern 26 mit den Polen P1, M1 der Energieversorgungsvorrichtung 20. Dabei stellen je zwei Stromleiter 26 eine Verbindung zwischen dem Pluspol P1 der Energieversorgungsvorrichtung 20 und der ersten Aufnahmevorrichtung 80a her, während zwei andere Stromleiter 26 die Verbindung zwischen dem Minuspol M1 der Energieversorgungsvorrichtung 20 und der zweiten Aufnahmevorrichtung 80b herstellen. Die Bezugszeichen sind in Fig. 8 nur für Teilfigur 8a) angegeben, gelten aber für die übrigen Teilfiguren der Figur 8 analog.

### Bezugszeichenliste

- 10: erste Werkzeugmaschine
- 12: zweite Werkzeugmaschine
- 20: erste Energieversorgungsvorrichtung
- 22: zweite Energieversorgungsvorrichtung
- 26: Stromleiter
- 30: Schnittstelle
- 32: Kontaktbereich
- 40: weiblicher Kontaktpartner
- 42: Verjüngung
- 44: Schenkel des weiblichen Kontaktpartners
- 50: männlicher Kontaktpartner
- 52: Schwert
- 60: erste Beschichtung
- 62: zweite Beschichtung
- 64: erste Werkzeugmaschinen-Beschichtung
- 66: zweite Werkzeugmaschinen-Beschichtung
- 70: Verbraucher innerhalb der Werkzeugmaschine, z.B. Motor
- 80: Aufnahmevorrichtung
- 90: Energiespeicherzelle
- 100: System
- 110: elastisches Mittel zur Anfederung
- n: Kontaktpartner der ersten Werkzeugmaschine
- m: Kontaktpartner der zweiten Werkzeugmaschine
- a: Kontaktpartner der ersten Energieversorgungsvorrichtung
- b: Kontaktpartner der zweiten Energieversorgungsvorrichtung
- P1: Pluspol der ersten Energieversorgungsvorrichtung
- M1: Minuspol der ersten Energieversorgungsvorrichtung
- P2: Pluspol der zweiten Energieversorgungsvorrichtung
- M2: Minuspol der zweiten Energieversorgungsvorrichtung

## Patentansprüche

1. System (100) umfassend eine Werkzeugmaschine (10) und eine erste Energieversorgungsvorrichtung (20) und eine zweite Energieversorgungsvorrichtung (22), wobei die Energieversorgungsvorrichtungen (20, 22) über eine Schnittstelle (30) lösbar mit der Werkzeugmaschine (10) verbindbar sind,
**dadurch gekennzeichnet, dass**
die erste Energieversorgungsvorrichtung (20) eine Anzahl a von mindestens zwei Kontaktpartnern (a1, a2, ...) zur Übertragung von elektrischer Energie an die Werkzeugmaschine (10) aufweist, und wobei die zweite Energieversorgungsvorrichtung (22) eine Anzahl b von mindestens zwei Kontaktpartnern (b1, b2, ...) zur Übertragung von elektrischer Energie an die Werkzeugmaschine (10) aufweist, wobei die Anzahl a der Kontaktpartner der ersten Energieversorgungsvorrichtung (20) anders ist als die Anzahl b der Kontaktpartner der zweiten Energieversorgungsvorrichtung (22).

2. System (100) nach Anspruch 1
**dadurch gekennzeichnet, dass**
das System (100) eine zweite Werkzeugmaschine (12) aufweist, wobei die erste Werkzeugmaschine (10) mindestens einen ersten Kontaktpartner n1 zum Empfang von elektrischer Energie von der einer der Energieversorgungsvorrichtungen (20, 22) aufweist, wobei die zweite Werkzeugmaschine (12) mindestens einen zweiten Kontaktpartner m1 zum Empfang von elektrischer Energie von der einer der Energieversorgungsvorrichtungen (20, 22) aufweist, wobei die Anzahl n der Kontaktpartner der ersten Werkzeugmaschine (10) anders ist als die Anzahl m der Kontaktpartner der zweiten Werkzeugmaschine (12).

3. System (100) umfassend eine erste Werkzeugmaschine (10), eine erste Energieversorgungsvorrichtung (20) und eine zweite Energieversorgungsvorrichtung (22), wobei die Energieversorgungsvorrichtungen (20, 22) über eine Schnittstelle (30) lösbar mit den verbindbar sind,
**dadurch gekennzeichnet, dass**
die erste Energieversorgungsvorrichtung (20) mindestens zwei erste Kontaktpartner (a1, a2, ...) zur Übertragung von elektrischer Energie an die Werkzeugmaschine (10) aufweist, und wobei die zweite Energieversorgungsvorrichtung (22) ) mindestens zwei zweite Kontaktpartner (b1, b2, ...) zur Übertragung von elektrischer Energie an die Werkzeugmaschine (10) aufweist, wobei die ersten Kontaktpartner (a1, a2, ...) eine erste Beschichtung (60) aufweisen und die zweiten Kontaktpartner (b1, b2, ...) eine zweite Beschichtung (62) aufweisen.

4. System (100) nach Anspruch 3
**dadurch gekennzeichnet, dass**
die erste Beschichtung (60) und/oder die zweite Beschichtung (62) eine Beschichtung mit einer erhöhten Verschleißfestigkeit ist.

5. System (100) nach Anspruch 3 oder 4
**dadurch gekennzeichnet, dass**
das System (100) eine zweite Werkzeugmaschine (12) aufweist, wobei die erste Werkzeugmaschine (10) mindestens einen ersten Kontaktpartner n1 zum Empfang von elektrischer Energie von der einer der Energieversorgungsvorrichtungen (20, 22) aufweist und wobei die zweite Werkzeugmaschine (12) mindestens einen zweiten Kontaktpartner m1 zum Empfang von elektrischer Energie von der einer der Energieversorgungsvorrichtungen (20, 22) aufweist, wobei der mindestens eine ersten Kontaktpartner n1 eine erste Werkzeugmaschinen-Beschichtung (64) und der mindestens eine zweiten Kontaktpartner m1 eine zweite Werkzeugmaschinen-Beschichtung (66) aufweist.

6. System (100) nach Anspruch 5
**dadurch gekennzeichnet, dass**
die erste Werkzeugmaschinen-Beschichtung (64) und/oder die zweite Werkzeugmaschinen-Beschichtung (66) eine Beschichtung mit einer erhöhten Verschleißfestigkeit ist.

7. System (100) nach einem der vorhergehenden Ansprüche
**dadurch gekennzeichnet, dass**
die Energieversorgungsvorrichtungen (20, 22) weibliche Kontaktpartner (50) und/oder männliche Kontaktpartner (40) aufweisen.

8. System (100) nach einem der vorhergehenden Ansprüche
**dadurch gekennzeichnet, dass**
die Schnittstelle (30) mindestens einen elastisch ausgebildeten Stromleiter (26) aufweist.

9. System (100) nach einem der vorhergehenden Ansprüche
**dadurch gekennzeichnet, dass**
eine Spannung der ersten Energieversorgungsvorrichtung (20) und der zweiten Energieversorgungsvorrichtung (22) im Wesentlichen gleich ist.

10. System (100) nach einem der vorhergehenden Ansprüche
**dadurch gekennzeichnet, dass**
mindestens ein Kontaktpartner (40, 50) angefedert ist.

11. System (100) nach einem der vorhergehenden Ansprüche
**dadurch gekennzeichnet, dass**
die Werkzeugmaschinen (10, 12) und/oder die Energieversorgungsvorrichtungen (20, 22) mindestens eine Aufnahmevorrichtung (80) zur Aufnahme von mindestens einem Kontaktpartner (40, 50) aufweisen.

12. System (100) nach Anspruch 11
**dadurch gekennzeichnet, dass**
die Aufnahmevorrichtung (80) angefedert ist.

13. Energieversorgungsvorrichtung (1) zur Verwendung in dem System nach einem der Ansprüche 1 bis 12
**dadurch gekennzeichnet, dass**
die Energieversorgungsvorrichtung (1) mindestens eine Energiespeicherzelle (9) umfasst, wobei die mindestens eine Energiespeicherzelle (90) einen Innenwiderstand DCR_I von kleiner als 10 Milliohm aufweist.

14. Energieversorgungsvorrichtung (1) nach Anspruch 13
**dadurch gekennzeichnet, dass**
die Energieversorgungsvorrichtung (1) mindestens eine Energiespeicherzelle (90) umfasst, wobei die mindestens Zelle (90) eine Oberfläche A und ein Volumen V aufweisen, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

15. Energieversorgungsvorrichtung (1) nach Anspruch 13 oder 14
**dadurch gekennzeichnet, dass**
die Energieversorgungsvorrichtung (1) mindestens eine Zelle (2) umfasst, wobei ein Verhältnis eines Widerstands der mindestens einen Zelle (2) zu einer Oberfläche A der mindestens einen Zelle (2) kleiner als 0,2 Milliohm/cm² ist, bevorzugt kleiner als 0,1 Milliohm/cm², am meisten bevorzugt kleiner als 0,05 Milliohm/cm².
